(19) Europäisches Patentamt
European Patent Office
Office européen des brevets

(11) **EP 4 170 593 B1**

(12) **EUROPEAN PATENT SPECIFICATION**

(45) Date of publication and mention of the grant of the patent:
**29.01.2025   Bulletin 2025/05**

(21) Application number: **22200281.8**

(22) Date of filing: **07.10.2022**

(51) International Patent Classification (IPC):
**G06T 7/73** (2017.01)    **G01C 21/20** (2006.01)
**G01C 21/00** (2006.01)

(52) Cooperative Patent Classification (CPC):
**G06T 7/73; G01C 21/206; G01C 21/383;**
G06T 2207/20081; G06T 2207/20084;
G06T 2207/30244

(54) **AUTOMATED ANALYSIS OF VISUAL DATA OF IMAGES TO DETERMINE THE IMAGES' ACQUISITION LOCATIONS ON BUILDING FLOOR PLANS**

AUTOMATISIERTE ANALYSE VISUELLER DATEN VON BILDERN ZUR BESTIMMUNG DER AUFNAHMEORTE VON BILDERN AUF GEBÄUDEBODENPLÄNEN

ANALYSE AUTOMATISÉE DE DONNÉES VISUELLES D'IMAGES POUR DÉTERMINER LES EMPLACEMENTS D'ACQUISITION D'IMAGES SUR DES PLANS D'ÉTAGE DE CONSTRUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.10.2021   US 202163270794 P**
**15.11.2021   US 202163279247 P**

(43) Date of publication of application:
**26.04.2023   Bulletin 2023/17**

(73) Proprietor: MFTB Holdco, Inc.
**Seattle, Washington 98101 (US)**

(72) Inventors:
• **Min, Zhixiang**
**Jersey City (US)**
• **Khosravan, Naji**
**Seattle (US)**
• **Narayana, Manjunath**
**Chino Hills (US)**
• **Bessinger, Zachary S**
**Crestwood (US)**
• **Kang, Sing Bing**
**Redmond (US)**
• **Boyadzhiev, Ivaylo**
**Seattle (US)**

(74) Representative: **Reddie & Grose LLP**
**The White Chapel Building**
**10 Whitechapel High Street**
**London E1 8QS (GB)**

(56) References cited:
**US-A1- 2019 020 817     US-A1- 2020 116 493**

• **CRUZ STEVE ET AL: "Zillow Indoor Dataset: Annotated Floor Plans With 360° Panoramas and 3D Room Layouts", 2021 IEEE/CVF CONFERENCE ON COMPUTER VISION AND PATTERN RECOGNITION (CVPR), 1 June 2021 (2021-06-01), pages 2133 - 2143, XP093029864, Retrieved from the Internet <URL:https://openaccess.thecvf. com/content/CVPR2021/papers/Cruz_Zillow_In door_Dataset_Annotated_Floor_Plans_Wit h_360deg_Panoramas_and_CVPR_2021_paper. pdf> DOI: 10.1109/CVPR46437.2021.00217**

EP 4 170 593 B1

**Description**

TECHNICAL FIELD

The following disclosure relates generally to techniques for automatically determining the acquisition location of an image on a building floor plan based on an analysis of visual data of the image relative to analysis of the floor plan and for subsequently using the determined acquisition location information in one or more manners, such as to use the image's acquisition location to improve navigation of the building.

BACKGROUND

In various fields and circumstances, such as architectural analysis, property inspection, real estate acquisition and development, general contracting, improvement cost estimation, automated navigation, etc., it may be desirable to know the interior of a house, office, or other building without having to physically travel to and enter the building. However, it can be difficult to effectively capture, represent and use such building interior information, including to display visual information captured within building interiors to users at remote locations (*e.g.*, to enable a user to fully understand the layout and other details of the interior, including to control the display in a user-selected manner). In addition, while a floor plan of a building may provide some information about layout and other details of a building interior, such use of floor plans has some drawbacks, including that floor plans can be difficult to construct and maintain, to accurately scale and populate with information about room interiors, to visualize and otherwise use, etc.

US 2020/116493 discloses a method for automatically generating mapping information for a defined area, which involves displaying generated floor map of building on client devices, to cause use of displayed generated floor map of building for navigating building.

BRIEF DESCRIPTION OF THE DRAWINGS

Figure 1 includes a diagram depicting an exemplary building interior environment and computing system(s) for use in embodiments of the present disclosure, including to generate and present information representing an interior of the building.

Figures 2A-2I illustrate examples of automatically analyzing information about a floor plan for a building and of automatically analyzing visual data taken in an interior of the building, such as to automatically determine and present an acquisition location of the image on the floor plan.

Figure 3 is a block diagram illustrating a computing system suitable for executing an embodiment of a system that performs at least some of the techniques described in the present disclosure.

Figures 4A-4B illustrate an example embodiment of a flow diagram for an Image Floor Plan Location Mapping Manager (IFPLMM) system routine in accordance with an embodiment of the present disclosure.

Figure 5 illustrates an example embodiment of a flow diagram for a Building Map Viewer system routine in accordance with an embodiment of the present disclosure.

DETAILED DESCRIPTION

The present disclosure describes techniques for using computing devices to perform automated operations related to determining the acquisition location of an image based at least in part on an analysis of visual data of the image and comparison to corresponding analyzed floor plan information, and for subsequently using the determined image acquisition location information in one or more further automated manners. In at least some embodiments, images to be analyzed include one or more panorama images or other images (*e.g.*, rectilinear perspective images) acquired at one or more acquisition locations in an interior of a multi-room building (*e.g.*, a house, office, etc.), and the determined image acquisition location information includes at least a location on a floor plan of the building and in some situations further includes an orientation or other direction information for at least a part of the image(s) - in at least some such embodiments, the automated image acquisition location determination is further performed without having or using any acquired depth data from any depth sensors or other distance-measuring devices about distances from an image's acquisition location to walls or other objects in the surrounding building. The determined image acquisition location information may be further used in various manners in various embodiments, such as in conjunction with a corresponding building floor plan and/or other generated mapping-related information (*e.g.*, a three-dimensional model of the building's interior), including for controlling navigation of mobile devices (*e.g.*, autonomous vehicles), for display or other presentation on one or more client devices in corresponding GUIs (graphical user interfaces), etc. Additional details are included below regarding the automated acquisition and use of determined image acquisition location information, and some or all of the techniques described herein may, in at least some embodiments, be performed via automated operations of an Image Floor Plan Location Mapping Manager ("IFPLMM") system, as discussed further below.

In at least some embodiments and situations, some or all of the images acquired for a building are each a panorama image that is acquired at an acquisition location in or around the building, such as to generate a panorama image at each of multiple such acquisition locations from one or more of a video at that acquisition location (*e.g.*, a 360° video taken from a smartphone or other mobile device held by a user turning at that acquisition location), or multiple images acquired in multiple directions from the acquisition location (*e.g.*, from a smartphone or other mobile device held by a user turning at that acquisition location), or a simultaneous capture of all the image information (*e.g.*, using one or more fisheye lenses), etc. It will be appreciated that such a panorama image may in some situations be presented using an equirectangular projection (with vertical lines and other vertical information in an environment being shown as straight lines in the projection, and with horizontal lines and other horizontal information in the environment being shown in the projection in a curved manner if they are above or below a horizontal centerline of the image and with an amount of curvature increasing as a distance from the horizontal centerline increases) and provide up to 360° coverage around horizontal and/or vertical axes, such that a user viewing a starting panorama image may move the viewing direction within the starting panorama image to different orientations to cause different images (or "views") to be rendered within the starting panorama image (including to present the image being rendered as a perspective image using a planar coordinate system). Furthermore, acquisition metadata regarding the capture of such panorama images may be obtained and used in various manners in some embodiments, such as data acquired from IMU (inertial measurement unit) sensors or other sensors of a mobile device as it is carried by a user or otherwise moved between acquisition locations, while in other embodiments such acquisition metadata is not acquired or used (*e.g.*, so as to determine an acquired image's acquisition location on a building floor plan based solely on the visual data of the image). Additional details are included below related to the acquisition and usage of panorama images or other images for a building.

As noted above, automated operations of an IFPLMM system may include determining the acquisition location of an image that is captured in a defined area of a building (*e.g.*, in a room of a house or other building) based at least in part on an analysis of the visual information included in the image's contents. In at least some embodiments, such automated determination of an image's acquisition location may include some or all of the following: using a trained neural network (*e.g.*, a deep convolutional neural network) to analyze the image and determine features of the visual data of the image contents (*e.g.*, based on colors and/or estimated depth for each pixel; based on information for groups of associated pixels, such as colors and/or textures and/or estimated depths; etc., or more generally to determine one or more latent space visual data features that are generated by the trained neural network); creating a circular descriptor for the image that has a quantity of degrees corresponding to a field of view of the image (*e.g.*, a circular descriptor that represents 360 degrees for a panorama image with 360° of horizontal visual coverage, a circular descriptor that represents 180° for a panorama image with 180° of horizontal visual coverage, a circular descriptor that represents 72 degrees for a non-panorama perspective image with 72° of horizontal visual coverage, etc.) and with each degree of the image circular descriptor encoding information about determined feature(s) from the image for a corresponding degree in the image's visual data (*e.g.*, relative to a direction within the image that is designated as 0° or otherwise as a starting angle or direction); and comparing the image circular descriptor to one or more corresponding building location circular descriptors that each represents information from the building's floor plan for a corresponding location associated with the building, with one or more best matching building location circular descriptors then identified and used to determine an acquisition location of the image in a room or other area associated with the building.

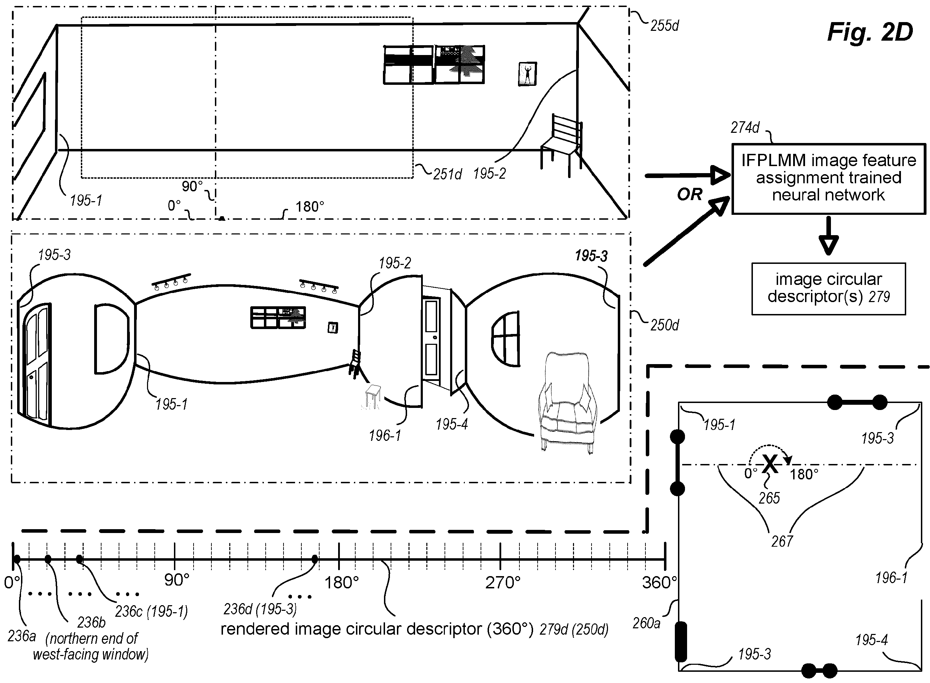

Consider, for the purposes of an illustrative example, a panorama image captured in a room of a building, with the panorama image including 360° of horizontal coverage around a vertical axis (*e.g.*, a full circle showing all of the walls of the room from the acquisition location of the panorama image, unless a portion of a wall is occluded by intervening objects in the room and/or by another intervening wall, such as for room shapes that are not purely rectangular), and with the x and y axes of the image's visual contents being aligned with corresponding horizontal and vertical information in the room (*e.g.*, the border between two walls, the border between a wall and the floor, the bottoms and/or tops of windows and doors, etc.), such that the image is not skewed or otherwise misaligned with respect to the room. For the purposes of this example, the image capture may be performed sequentially at multiple directions from an acquisition location using changing camera orientations, beginning with a camera orientation in a northern direction that corresponds to a relative starting horizontal direction of 0° for this panorama image, and continues in a circle, with a relative 90° horizontal direction for this panorama image then corresponding to the eastern direction, a relative 180° horizontal direction for this panorama image corresponding to the southern direction, a relative 270° horizontal direction for this panorama image corresponding to the western direction, and a relative 360° ending horizontal direction for this panorama image being back to the northern direction. In at least some embodiments, the information about the locations of identified features of the visual data of the panorama image are encoded in a manner specific to such angular degrees of direction from the acquisition location (*e.g.*, relative to the starting direction of the panorama image), producing an image circular descriptor for the image that encodes information about 360° of visual coverage in the image - thus, the image circular descriptor for such an image may encode information about what features are identified in each of 360 horizontal degrees (*e.g.*, to combine feature information for a given horizontal degree direction for a range of vertical degree directions in that horizontal degree direction). Such information about the locations of identified features may be encoded and stored in various manners in various embodiments, including in some embodiments in an array or vector having one or more values for each angular degree of direction, such as to identify one or more features present in a given angular direction. In addition, in other embodiments and situations, the feature information for an image may be identified and represented in manners other than based on angular differences from a starting direction of the image, resulting in other types of image descriptors that are used in similar manners. Additional details are included below regarding the construction and use of such image circular descriptors, including with respect to the examples of Figure 2D-2I and their associated description.

As noted above, the automated determination of the acquisition location of an image in a room of a building (or other defined building area) by an embodiment of the IFPLMM system may include matching the angular information encoded in the image's generated image circular descriptor to corresponding angular information in building location circular descriptors generated from a floor plan for the building, such as to determine a particular image acquisition location (and optionally orientation) in the room or other area. In order to generate the building location circular descriptors from a building's floor plan, the automated operations of the IFPLMM system may further include starting with an existing floor plan of the building, such as a two-dimensional rasterized floor plan that uses a top-down view to show at least the wall structures of the building interior and optionally has additional associated information, such as semantic information about structural wall elements (*e.g.*, locations of doors, windows, and other inter-room wall openings) and/or structural information for additional areas associated with the building (*e.g.*, one or more additional exterior structures, such as a separate garage or car port, accessory dwelling unit, shed, etc.; one or more other external areas, such as a yard, garden, porch, deck, patio, balcony, sidewalk or other path, etc.), and generating a point cloud corresponding to at least the structural information of the floor plan (*e.g.*, a two-dimensional, or "2D", point cloud; a three-dimensional, or "3D", point cloud if additional height information is available; etc.) - each point in the point cloud may further be assigned one or more types of associated information, such as a 2D location on the floor plan (*e.g.*, a relative location from a designated spot, such as to treat the lowest and left-most point as 0,0 for X-Y axes), a normal direction (*e.g.*, relative to a planar surface formed by that point and adjacent points), associated semantic information (if any) associated with that floor plan position, etc. In at least some embodiments, such automated determination of one or more building location circular descriptors for the floor plan may include some or all of the following: using a trained neural network (*e.g.*, a deep convolutional neural network, such as similar to but separately trained from the neural network used to analyze images' visual data) to analyze the floor plan point cloud data and any additional associated information to determine corresponding features (*e.g.*, one or more latent space data features generated by the trained neural network); and, for each room or other area associated with the building, creating one or more building location circular descriptors for that room or other area (*e.g.*, multiple building location circular descriptors for multiple locations within that room or other area, such as in a grid or other chosen formation) that each has a selected quantity of degrees (*e.g.*, 360°) and with each degree of a building location circular descriptor encoding information about any determined feature(s) from the floor plan and associated information for any floor plan point cloud points present at a corresponding degree direction in the floor plan from that building location (*e.g.*, with a direction designated as 0° or otherwise as a starting angle or direction, such as corresponding to north or to an upward direction on a 2D floor plan). Such building location circular descriptors may be predetermined, for example, before any corresponding image circular descriptors are generated or used, or may instead in some situations be dynamically created at a time of use for comparison to an image circular descriptor for an image taken in an area associated with the building. In some embodiments, the feature information for a particular degree in a building location circular descriptor for a building location may encode information about an incident angle from the building location to any point(s) of the point cloud in the direction of that particular degree from the building location (*e.g.*, using an enumerated group of incident angle ranges, such as relative to the point(s)' normal direction) and an estimated distance between the building location and the location(s) of the point(s) (*e.g.*, using an enumerated group of distance ranges). In addition, in at least some embodiments, additional information may be associated with the building location circular descriptor(s) generated for a building room or other area and used for comparison of an image circular descriptor for a new image, such as to also use and encode visual data in the building location circular descriptor(s) from one or more other images that have previously been localized within that room or other area (localized by determining at least the acquisition location of such an image within that room or other area and by optionally further determining an orientation of the image within that room or other area, so as to together specify the 'pose' of the image within the room or other area, and such as with the orientation optionally identified by associating a particular image angle or other direction with a corresponding floor plan angle or other direction for the room or other area so as to align different rotational coordinate systems of the image and the floor plan, such as with the orientation optionally identified by determining a geographical direction, such as north, to which directions within the image and floor plan correspond, etc.).

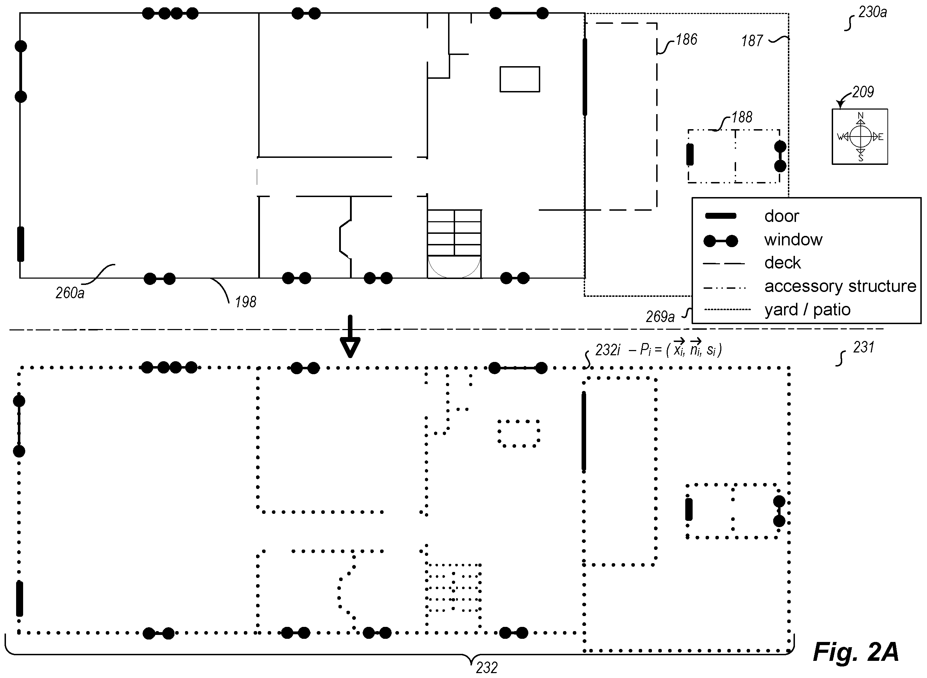

Once a plurality of building location circular descriptors are generated or otherwise obtained for a plurality of room locations in a room or other area of a building, they may be compared or otherwise matched to an image circular descriptor for an image taken in the room or other area in order to determine at least one of the building location circular descriptors that is a best match, with the acquisition location of the image then being identified based at least in part on the room location of the best match building location circular descriptor(s). For example, the image's determined acquisition location may in some embodiments and situations be selected to be that room location for a best match building location circular descriptor, or instead in other embodiments and situations the image's determined acquisition location may be determined to be within a small distance from that room location (*e.g.*, in a direction and/or amount based on differences between the image circular descriptor and that best match building location circular descriptor), such as by using a trained neural network (*e.g.*, separate from the one or more neural networks used to determine the features for the image and building floor plan point cloud) to refine the image acquisition location to a position between the building locations having defined building location circular descriptors. The matching process for an image circular descriptor and a building location circular descriptor may include determining a distance and/or or amount of similarity/dissimilarity between the two circular descriptors in one or more manners, including in a rotation-independent manner, such as by determining the probability that two circular descriptors are matching (with the highest matching probability corresponding to the smallest dissimilarity and/or distance), by measuring the differences between the vectors or other encoded formats for the circular descriptors being compared, etc. - as one non-exclusive example, a circular earth mover's distance metric may be used to compare the vectors for two such circular descriptors in a rotation-independent manner (*e.g.*, regardless of whether the two circular descriptors use the same direction in the room as their respective relative starting points), while in other embodiments differences in rotation between two descriptors may be handled in other manners. In addition, the matching process may in some embodiments include comparing the image circular descriptor to each possible building location circular descriptor (*e.g.*, all building location circular descriptors generated for one or more candidate buildings in which the image may have been captured), while in other embodiments only a subset of the building location circular descriptors for a particular building may be considered (*e.g.*, by performing a nearest neighbor gradient ascent or descent search using a defined similarity or dissimilarity metric). Additional details are included below regarding the construction and use of such building location circular descriptors, including for comparison to one or more image circular descriptors, such as with respect to the examples of Figures 2A-2I and their associated description.

The described techniques provide various benefits in various embodiments, including to allow floor plans of multi-room buildings and other structures to be automatically augmented with information about acquisition locations at which images are acquired in or around the buildings or other structures, including without having or using information from depth sensors or other distance-measuring devices about distances from images' acquisition locations to walls or other objects in a surrounding building or other structure - in at least some such embodiments, the determination of an image's acquisition location in an area associated with one or more buildings is further performed without having or using a predicted room layout from the image and/or without having any other images that are previously registered with determined acquisition locations on a building's floor plan. Furthermore, such automated techniques allow such image acquisition location information to be determined more quickly than previously existing techniques, and in at least some embodiments with greater accuracy, including by using information acquired from the actual building environment (rather than from plans on how the building should theoretically be constructed), as well as enabling the capture of changes to structural elements that occur after a building is initially constructed if a corresponding building floor plan reflects that actual building environment and/or such changes. Such described techniques further provide benefits in allowing improved automated navigation of a building by mobile devices (*e.g.*, semi-autonomous or fully-autonomous vehicles), based at least in part on the determined acquisition locations of images, including to significantly reduce computing power and time used to attempt to otherwise learn a building's layout. In addition, in some embodiments the described techniques may be used to provide an improved GUI in which a user may more accurately and quickly obtain information about a building's interior (*e.g.*, for use in navigating that interior), including in response to search requests, as part of providing personalized information to the user, as part of providing value estimates and/or other information about a building to a user, etc. Various other benefits are also provided by the described techniques, some of which are further described elsewhere herein.

As noted above, automated operations of an IFPLMM system may include determining the acquisition location of an image that is taken in a defined area (*e.g.*, in a room of a house or other building) based at least in part on an analysis of the visual information included in the image's contents. In at least some embodiments, such an IFPLMM system may operate in conjunction with one or more separate ICA (Image Capture and Analysis) systems and/or with one or more separate MIGM (Mapping Information and Generation Manager) systems, such as to obtain and use floor plans and other associated information for buildings from the MIGM system and/or to obtain images to be localized for a building from the ICA system, while in other embodiments such an IFPLMM system may incorporate some or all functionality of such ICA and/or MIGM systems as part of the IFPLMM system. In yet other embodiments, the IFPLMM system may operate without using some or all functionality of the ICA and/or MIGM systems, such as if the IFPLMM system obtains information about building floor plans and/or other associated information from other sources (*e.g.*, from manual creation by one or more users, from provision of such building floor plans and/or associated information by one or more external systems or other sources, etc.), and/or if the IFPLMM system obtains information about images to be localized from other sources (*e.g.*, from end users, such as in a crowdsourced manner). In addition, building floor plans that are used in the manner described herein may be in various formats (whether as originally obtained and/or after an initial automated analysis by the IFPLMM system), including in at least some embodiments to be in a vectorized form with specified information about the locations of structural elements such as one or more of the following: walls, windows, doorways and other inter-room openings, corners, etc. (*e.g.*, after initially receiving a non-vectorized image form of the building floor plan that is analyzed to produce the vectorized form).

With respect to functionality of such an ICA system, it may perform automated operations in at least some embodiments to acquire one or more images (*e.g.*, panorama images) at one or more acquisition locations associated with a building (*e.g.*, in the interior of multiple rooms of the building, at one or more exterior locations, etc.), and optionally further acquire metadata related to the image acquisition process and/or to movement of a capture device between multiple acquisition locations. For example, in at least some such embodiments, such techniques may include using one or more mobile devices (*e.g.*, a camera having one or more fisheye lenses and mounted on a rotatable tripod or otherwise having an automated rotation mechanism; a camera having one or more fisheye lenses sufficient to capture 360° horizontally without rotation; a smart phone held and moved by a user, such as to rotate the user's body and held smart phone in a 360° circle around a vertical axis; a camera held by or mounted on a user or the user's clothing; a camera mounted on an aerial and/or ground-based drone or robotic device; etc.) to capture visual data from one or more acquisition locations but without acquiring information from any depth sensors or other distance-measuring devices about distances between the acquisition location(s) and objects in an environment around the acquisition location(s), such as from a sequence of multiple acquisition locations within multiple rooms of a house (or other building). Additional details are included elsewhere herein regarding operations of device(s) implementing an ICA system, such as to perform such automated operations, and in some cases to further interact with one or more ICA system operator user(s) in one or more manners to provide further functionality.

With respect to functionality of such an MIGM system, it may perform automated operations in at least some embodiments to analyze multiple 360° panorama images (and optionally other images) that have been acquired for a building interior (and optionally an exterior of the building), and determine shapes or rooms or other areas and locations of passages connecting rooms or other areas for some or all of those panorama images, as well as to determine wall elements and other elements of some or all rooms or other areas of the building in at least some embodiments and situations. The types of connecting passages between two or more rooms or other areas may include one or more of doorway openings and other inter-room non-doorway wall openings, windows, stairways, non-room hallways, etc., and the automated analysis of the images may identify such elements based at least in part on identifying the outlines of the passages, identifying different content within the passages than outside them (*e.g.*, different colors or shading), etc. The automated operations may further include using the determined information to generate a floor plan for the building and to optionally generate other mapping information for the building (*e.g.*, a 3D model of the building interior and/or exterior), such as by using the inter-room passage information and other information to determine relative positions of the associated shapes of rooms or other areas to each other, and to optionally add distance scaling information and/or various other types of information to the generated floor plan. In addition, the MIGM system may in at least some embodiments perform further automated operations to determine and associate additional information with a building floor plan and/or specific rooms, areas or locations within the floor plan, such as to analyze images and/or other environmental information (*e.g.*, audio) captured within the building interior to determine particular attributes (*e.g.*, a color and/or material type and/or other characteristics of particular elements, such as a floor, wall, ceiling, countertop, furniture, fixtures, appliances, etc.; the presence and/or absence of particular elements, such as an island in the kitchen; etc.), or to otherwise determine relevant attributes (*e.g.*, directions that building elements face, such as windows; views from particular windows or other locations; etc.). Additional details are included below regarding operations of computing device(s) implementing an MIGM system, such as to perform such automated operations and in some cases to further interact with one or more MIGM system operator user(s) in one or more manners to provide further functionality.

The described techniques provide various benefits in various embodiments, including to improve the control of autonomous operations of excavator construction vehicles and/or other construction vehicles (*e.g.*, fully autonomous operations), such as based at least in part on training one or more machine learning behavioral models for one or more such construction vehicles (*e.g.*, one or more construction vehicle types) and on using the trained machine learning behavior model(s) to control corresponding autonomous operations of one or more corresponding construction vehicles. Furthermore, such automated techniques allow such training and usage operations to be performed more quickly and with greater accuracy than previously existing techniques, including to significantly reduce computing power and time used. In addition, in some embodiments the described techniques may be used to provide an improved GUI in which a user may more accurately and quickly obtain information about operations of excavator construction vehicles and/or other construction vehicles, including in response to search requests or other instructions, as part of providing personalized information to the user, etc. Various other benefits are also provided by the described techniques, some of which are further described elsewhere.

For illustrative purposes, some embodiments are described below in which specific types of information are acquired, used and/or presented in specific ways for specific types of structures and by using specific types of devices - however, it will be understood that the described techniques may be used in other manners in other embodiments, and that the invention is thus not limited to the exemplary details provided. As one non-exclusive example, while specific types of circular descriptors are generated for images and for room locations and are compared or otherwise matched in specific manners in some embodiments, it will be appreciated that other types of information to describe image contents and room locations may be similarly generated and used in other embodiments, including for buildings (or other structures or layouts) separate from houses, and that determined image acquisition location information may be used in other manners in other embodiments. In addition, the term "building" refers herein to any partially or fully enclosed structure, typically but not necessarily encompassing one or more rooms that visually or otherwise divide the interior space of the structure - non-limiting examples of such buildings include houses, apartment buildings or individual apartments therein, condominiums, office buildings, commercial buildings or other wholesale and retail structures (*e.g.*, shopping malls, department stores, warehouses, etc.), etc. The term "acquire" or "capture" as used herein with reference to a building interior, acquisition location, or other location (unless context clearly indicates otherwise) may refer to any recording, storage, or logging of media, sensor data, and/or other information related to spatial characteristics and/or visual characteristics and/or otherwise perceivable characteristics of the building interior or subsets thereof, such as by a recording device or by another device that receives information from the recording device. As used herein, the term "panorama image" may refer to a visual representation that is based on, includes or is separable into multiple discrete component images originating from a substantially similar physical location in different directions and that depicts a larger field of view than any of the discrete component images depict individually, including (but not limited to) images with a sufficiently wide-angle view from a physical location to include angles beyond that perceivable from a person's gaze in a single direction. The term "sequence" of acquisition locations, as used herein, refers generally to two or more acquisition locations that are each visited at least once in a corresponding order, whether or not other non-acquisition locations are visited between them, and whether or not the visits to the acquisition locations occur during a single continuous period of time or at multiple different times, or by a single user and/or device or by multiple different users and/or devices. In addition, various details are provided in the drawings and text for exemplary purposes, but are not intended to limit the scope of the invention. For example, sizes and relative positions of elements in the drawings are not necessarily drawn to scale, with some details omitted and/or provided with greater prominence (*e.g.*, via size and positioning) to enhance legibility and/or clarity. Furthermore, identical reference numbers may be used in the drawings to identify the same or similar elements or acts.

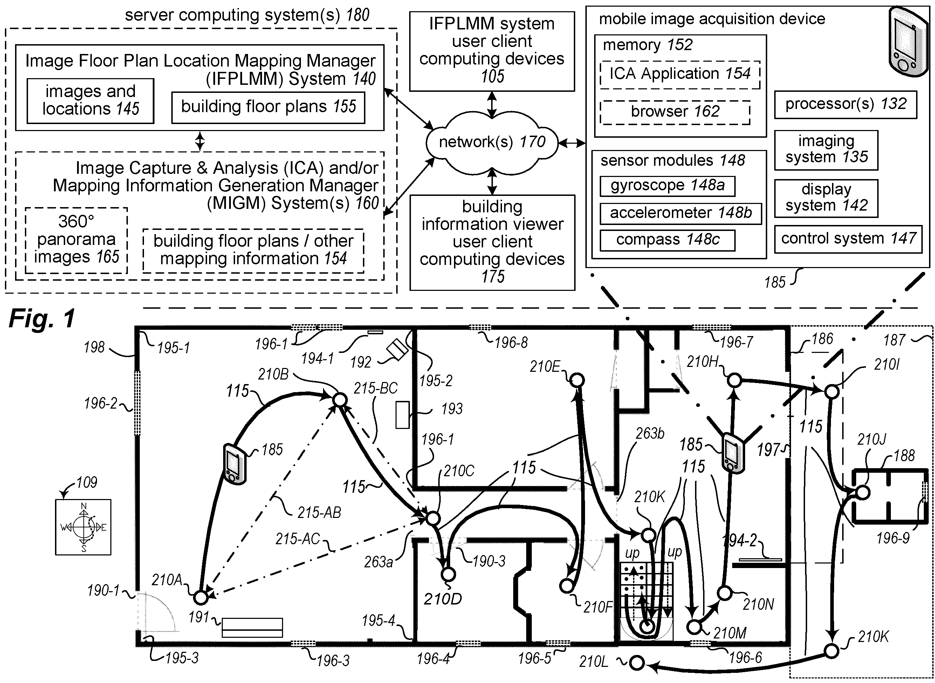

Figures 2A-2I illustrate examples of automatically analyzing information about a floor plan for a building and of automatically analyzing visual data of an image captured in an interior of the building, such as to automatically determine and present an acquisition location of the image on the floor plan (*e.g.*, for a building 198 discussed further with respect to Figure 1).

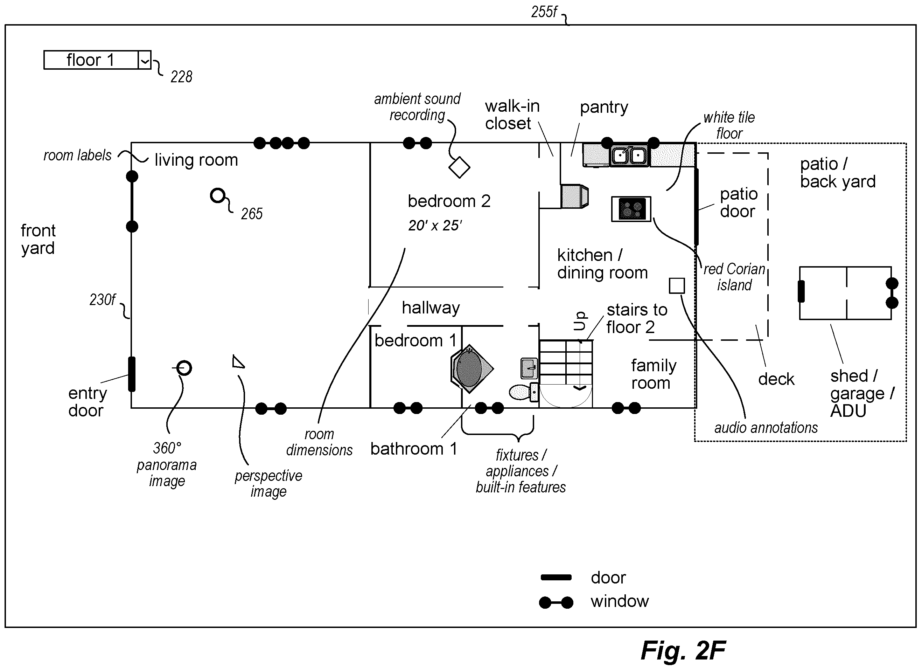

In particular, Figure 2A illustrates example 2D floor plan information 230a (*e.g.*, represented in a vectorized format), along with a legend 269a that includes semantic information about elements illustrated on the floor plan for rooms or other areas (*e.g.*, doors, windows, a deck, a yard and/or patio, an accessory dwelling unit or other external structure, etc.), and an optional geographical direction indicator 209. While the example building is a multi-story home (with stairs to an upper level shown near the center-right bottom of the floor plan), the example 2D floor plan information 230a shows only the sub-floor plan for the main level for the sake of simplicity - it will be appreciated that such floor plan information will often include multiple levels or other separate portions, optionally with visual indications of how they are linked or otherwise associated together, and the described types of processing may be performed for all such portions of the floor plan information. An example of a house 198 and associated surrounding area corresponding to the floor plan information 230a is discussed further with respect to Figure 1 and with portions of it shown in greater detail in Figures 2F-2G, with various rooms 260 (including a living room 260a that is the leftmost room) and with respect to areas external to the main building (house 198) that include an external deck or patio or balcony 186, a larger external yard or patio 187, an external additional structure 188 (*e.g.*, a garage, shed, accessory dwelling unit, greenhouse, etc.). The automated operations of the IFPLMM system (not shown) include analyzing the 2D floor plan information 230a to generate an associated 2D point cloud 231 with a plurality of points $P$ 232 (*e.g.*, based on a defined sampling rate or size, such as X points for each Y distance) - in this example embodiment, the analysis of the 2D floor plan information 230a includes generating information for each point $P$ that includes a 2D XY location vector $x$, a normal direction vector $n$ and semantic information $s$, with a particular point $P_i$ shown with corresponding associated information $x_i$, $n_i$ and $s_i$.

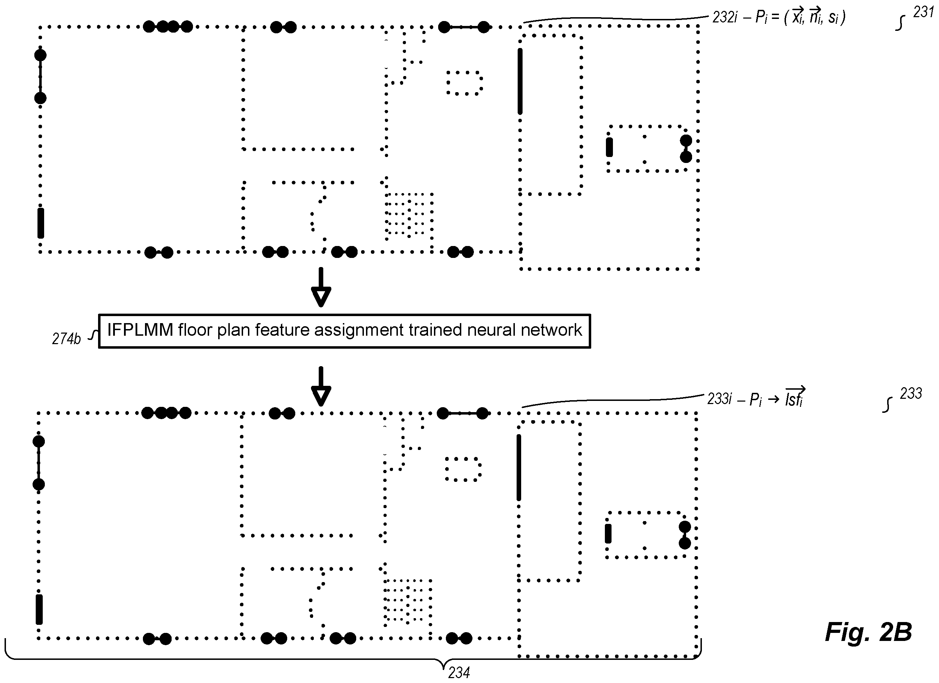

Figure 2B continues the example of Figure 2A, and illustrates how the 2D point cloud 231 is supplied to a neural network 274b of the IFPLMM system that has been trained to assign features to a floor plan's 2D point cloud (*e.g.*, using both positive and negative labeled training examples), to produce an augmented 2D point cloud 233 with a plurality of points $P$ 234 that are each associated with a vector $lsf$ of latent space features, with a particular point $P_i$ shown with corresponding associated information $lsf_i$.

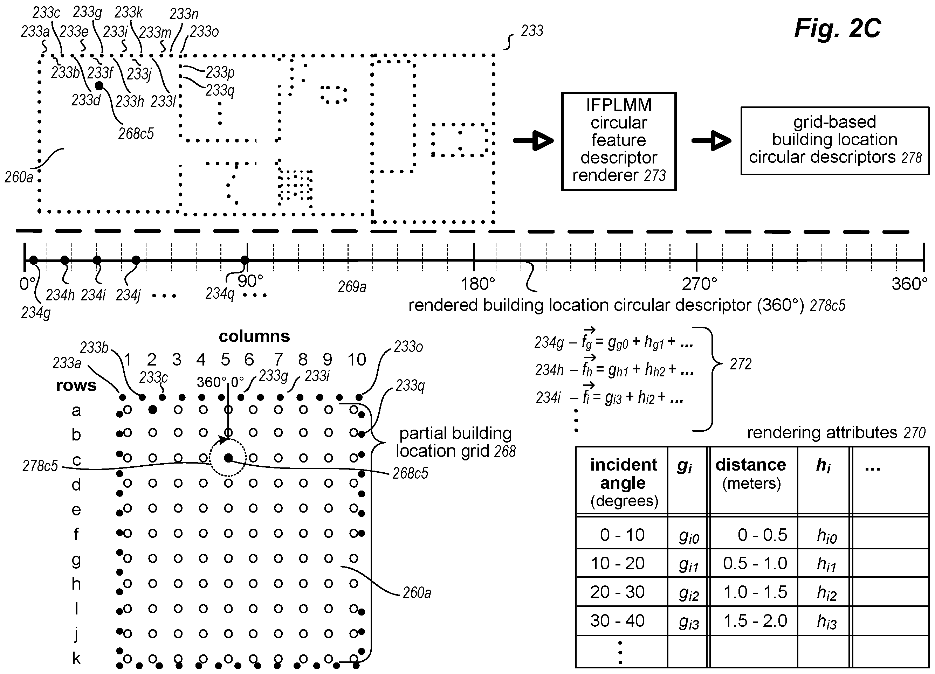

Figure 2C continues the examples of Figure 2A-2B, and illustrates how the augmented 2D point cloud 233 is supplied to a rendering component 273 of the IFPLMM system that generates a variety of building location circular descriptors 278 for the rooms or other areas of the building, with the building location circular descriptors generated in a grid layout in this example. For example, room 260a is illustrated within the augmented 2D point cloud 233, and in shown in more detail with a grid 268 of example building locations for which building location circular descriptors are generated - the illustrated building locations 268 are only a partial subset of the building locations for which the building location circular descriptors 278 are generated (*e.g.*, a part of a larger building location grid, not shown, that extends throughout the house), since they are illustrated for only a single room for the sake of brevity, while the total building locations will include some or all other rooms of the building as well, and may further optionally include some or all of the illustrated areas external to the main house 198 (*e.g.*, some or all of an external deck or patio or balcony or yard or additional external structure, etc.). Figure 2C further illustrates information about a specific building location circular descriptor 278c5 corresponding to an example grid location 268c5 - it will be appreciated that the positions within such a grid may be determined in a variety of manners (*e.g.*, based on a defined quantity of rows and/or columns, based on a defined total quantity of room locations, based on a defined horizontal and/or vertical distance between adjacent room locations, etc.), and that a group of room locations may have a form other than a grid in other embodiments (including in some cases to be selected randomly or otherwise in an irregular fashion). In at least some embodiments, a building location circular descriptor will be generated for each of the room locations, such as for later use in comparing those building location circular descriptors to an image circular descriptor for an image in order to determine which of the building location circular descriptors is a best match to that image circular descriptor.

In this example, each building location circular descriptor uses the northward direction to correspond to 0°, continuing in a clockwise manner for 360°. The building location circular descriptor for a given room location may be generated in a variety of manners in various embodiments, including by using geometric techniques to determine the angular amount from a given room location and starting direction to a given location of a point cloud point (*e.g.*, on a wall). For purposes of illustration, a variety of point cloud points 233a-233q are illustrated for room 260a, with corresponding feature information being illustrated in example building location circular descriptor 278c5 - while the 360 degrees are represented in a linear fashion in the example building location circular descriptor 278c5 shown in Figure 2C, it will be appreciated that the building location circular descriptor may instead be represented as a circle or ring (or arc if less than 360° are used) in other embodiments. Figure 2C further illustrates information 270 about attributes that may be used as part of rendering feature information for particular point cloud points, with information 272 illustrating examples of feature information that may be generated for point cloud points 234g-234i for the building location circular descriptor 278c5 for building location 268c5. In this example, the attributes include incident angle information in a group of enumerated incident angle ranges, distance information in a group of enumerated distance ranges, and optionally other attribute information, such as to provide a sense of surrounding geometry for the building location - in other embodiments, attributes may be encoded in other manners (*e.g.*, with exact values for incident angles and/or distances rather than ranges; to use information for attributes other than incident angles and/or distances, whether instead of or in addition to incident angles and/or distances; etc.). In particular, with respect to point 234g in this example, it has an incident angle value of $g_{g0}$ for building location 268c5 (corresponding to an incident angle between 0° and 10°) and distance value of $h_{g1}$ for building location 268c5 (corresponding to an distance between 0.5 and 1 meter), with a corresponding feature $f_g$ vector stored in a corresponding position of the building location circular descriptor 278c5 (labeled in this example using the '234g' reference for that point) - similar information is encoded and stored for each of the points visible from building location 268c5, and similar processing is done for each of the other building locations and their associated generated building location circular descriptors. In at least some points, when generating a building location circular descriptor, an occlusion test is first applied to find a set of points that are visible to that building location, and based on the angles at which the points are observed, the points are projected to the building location circular descriptor.

Figure 2D continues the examples of Figures 2A-2C, and illustrates alternative example panorama images 255d and 250d for which acquisition location may be determined using the building location circular descriptors 278 generated in Figure 2C, along with additional information that illustrates a location 265 in room 260a at which the example panorama images were actually acquired. In this example, the panorama image 255d represents a 180° panorama image that is taken from acquisition location 265 in the living room 260a of the house 198, as shown using information 265 and 267 on the floor plan excerpt for room 260a, and panorama image 250d represents a 360° panorama image that is taken from acquisition location 265. Using such a panorama image 255d or 250d, various subsets of the panorama image may be displayed to an end user (not shown), with an example subset 251d shown as part of the panorama image 255d. Alternatively, the subset 251d may instead represent a separate perspective image that is acquired at acquisition location 265 in the living room 260a of the house 198, with the acquisition location determination instead being performed for the perspective image (whether instead of or in addition to acquisition location determination for panorama images 255d and/or 250d). In this example, one or more of the panorama images 255d and 250d and perspective image 251d are supplied to neural network 274d of the IFPLMM system that is trained to generate a corresponding image circular descriptor 279 for each supplied image. Since the panorama image 255d and perspective image 251d do not extend to a full 360° horizontal degrees in this example, the corresponding image circular descriptor for either would encode information for less than 360°, as discussed elsewhere herein. For the purpose of illustration, this example continues with panorama image 250d and its corresponding image circular descriptor 279d. In particular, the panorama image 250d is captured in the living room of the house and includes 360° of horizontal coverage around a vertical axis in this example, with the image displayed in an equirectangular format, and with the x and y axes of the image's visual contents being aligned with corresponding horizontal and vertical information in the room (*e.g.*, the border between two walls, the border between a wall and the floor, the bottoms and/or tops of windows and doors, etc.). In this example, the image capture may, for example, begin with a camera orientation in a western direction, corresponding to a relative starting horizontal direction of 0° for the panorama image 250d, and continues in a full circle, with a relative 90° horizontal direction for this panorama image then corresponding to the northern direction, a relative 180° horizontal direction for this panorama image corresponding to the eastern direction, a relative 270° horizontal direction for the 360° panorama image corresponding to the southern direction, and a relative 360° ending horizontal direction for the 360° panorama image being back to the western direction. Accordingly, for each of the degrees of the image circular descriptor 279d from 0° to approximately 20°, the image circular descriptor will encode information about features in the image's visual data corresponding to the western wall of room 260a, starting with approximately the horizontal middle of the western-facing window (*e.g.*, visual information transmitted through or reflected from those portions of the window) at 0° and including information vertically in that horizontal direction in the image's visual data (*e.g.*, the wall above and below that vertical slice of the window, and continuing to the visible portions of the ceiling and floor in that horizontal direction), with example features 236a and 236b shown in that range. As the horizontal directions within the image's visual data reaches the north end of that window and continues toward the northwest corner 195-1, the image circular descriptor 279d will continue to encode information about features in the image's visual data corresponding to the western wall of room 260a, with features 236c corresponding to the northwest corner 195-1 shown at approximately 35°. As the horizontal directions within the image's visual data continues past the northwest corner 195-1 and continues toward the northeast corner 195-2, the image circular descriptor 279d will continue to encode information about features in the image's visual data corresponding to the northern wall of room 260a, concluding with features 236d corresponding to the northeast corner 195-2 shown at approximately 165°. Such encoding of visual data features continues for all 360°. As previously noted, information about the determined positions of identified features in an circular descriptor may be encoded and stored in various manners in various embodiments, including in a vector or array having one or more values for each angular degree of direction, such as to identify features present in a given angular direction - in other embodiments, other angular information than single horizontal degrees may be represented in a circular descriptor, such as less than a single degree or instead multiple degrees, and/or to represent vertical degrees (whether instead of or in addition to horizontal degrees). In addition, while the panorama images in the examples above were captured with a starting direction of westward, it will be appreciated that panorama images may be captured in other manners in other situations - for example, other panorama images may have different starting directions, or if a panorama image instead had its entire horizontal coverage captured simultaneously (*e.g.*, via one or more fisheye lenses) then a particular direction may be chosen to be treated as a relative 0° for that panorama image (*e.g.*, chosen arbitrarily; by using a predefined direction, such as northward; etc.).

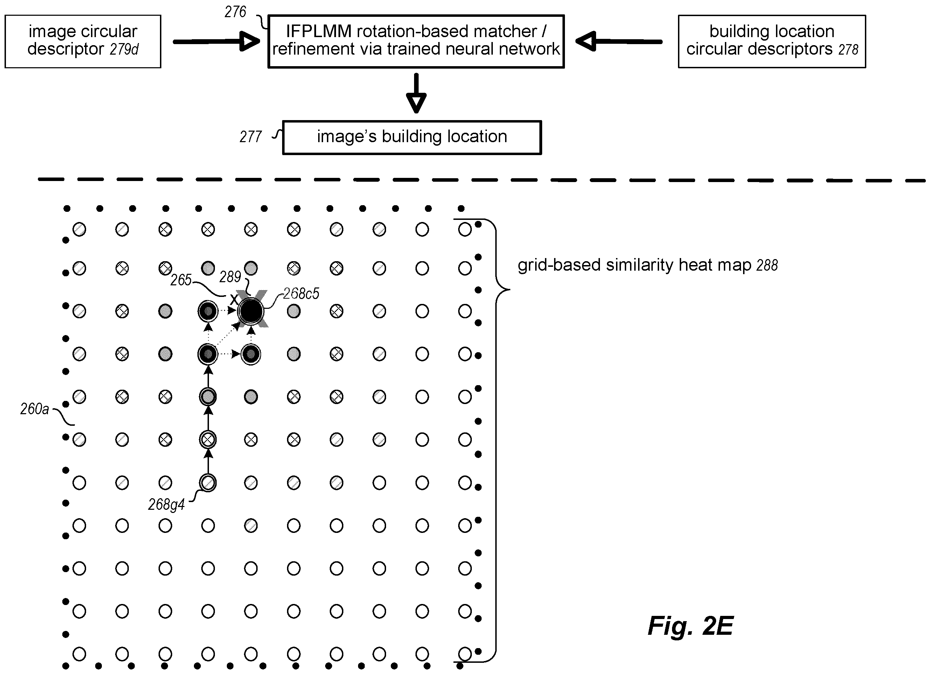

Figure 2E continues the examples of Figures 2A-2D, and includes one or more components 276 of the IFPLMM system that take the example image circular descriptor 279d from Figure 2D and the building location circular descriptors 278 of Figure 2C as input, and generate a determined acquisition location 277 of the panorama image 250d on the floor plan 230a - the component(s) 276 may include, for example, a rotation-based matcher component that selects a best matching building location circular descriptor, and optionally a neural network that is trained to refine the image's acquisition location to include positions between the building locations to which the building location circular descriptors 278 correspond. In addition, Figure 2E further illustrates an excerpt of the floor plan for the living room 260a in a manner similar to that of Figure 2C, including to show the room location grid from Figure 2C, but with the grid 288 in Figure 2E including additional information about a degree of match of the associated building location circular descriptor for each room location to that of image circular descriptor 279d (*e.g.*, in a manner similar to a heat map). In this example, the similarity/dissimilarity information 288 indicates that the grid room location 268c5 has a highest degree of match (*e.g.*, highest degree of similarity, lowest degree of dissimilarity, lowest distance, etc.) to image circular descriptor 279d, while the room locations at rows 3 and 4 of column d and at row 4 of column e have the next highest degree of match, and with various other room locations generally decreasing in their degree of match as their distance to room location 268c5 increases. In at least some embodiments, the comparison of the image circular descriptor to the building location circular descriptors for the room may include starting at a selected room location (*e.g.*, randomly selected, selected at or near the center of the room, etc.), such as room location 268g4 in this example, and using a nearest neighbor search to repeatedly move in a direction of adjacent room locations with a higher degree of match until a best match is identified, as illustrated in the excerpt 260f for room location 268c5, although other matching techniques may be used in other embodiments (*e.g.*, an exhaustive comparison to all building location circular descriptors, without such incremental searching being used). After the room location with the best match is determined, a corresponding location in the room may be assigned as the determined acquisition location 289 of the 360° panorama image, such as that room location of that best match building location circular descriptor in this illustrated example, or in some embodiments to be within a small distance from that room location based on additional refinement processing performed by an IFPLMM system component (*e.g.*, a calculated distance based on an amount and/or type of difference between the image circular descriptor and the best match building location circular descriptor). Once the acquisition location of the 360° panorama image is determined (whether at nearest building location 289 or actual location 265), it may be stored with the floor plan and/or otherwise used in one or more manners, as discussed in greater detail elsewhere herein.

While not illustrated in the examples of Figures 2A-2E, in some embodiments and situations, an acquisition location determination may be performed for an image that might have been captured in any of multiple candidate areas of one or more buildings - such acquisition location determination activities may be performed in various manners in various embodiments, such as to consider each possible area and/or building and find the best matching building location across all of them, to narrow the group of possible candidate areas before performing matching (*e.g.*, by attempting to identify one or more features and/or visual elements from the image that are present in only one or a subset of the possible candidate areas, by using GPS or other location information associated with the image acquisition, etc.). In such embodiments, a grid of building location circular descriptors for the building may extend throughout some or all rooms and/or other areas of the building, and the corresponding search of a best match for an image's circular descriptor to the building's building location circular descriptors may extend across the building location circular descriptors of multiple rooms or other areas (*e.g.*, may include considering all building location circular descriptors generated for the building).

With respect to finding a best match building location circular descriptor for image circular descriptor 279d from multiple possible building locations in the room, some or all of the building location circular descriptors for the room locations in the grid may be compared to the image circular descriptor 279d to determine a degree of match in various manners in various embodiments. For example, in some embodiments a circular earthmover's distance metric may be used to compare two such descriptors in a rotation independent manner, such that the two descriptors may have relative 0° starting directions that point in different directions. Other measures of distance or similarity/dissimilarity may be used in other embodiments, such as by measuring the distance for each angular degree and aggregating that information across all of the angular degrees.

In addition, to facilitate a comparison of two such circular descriptors in situations in which the distance or similarity/dissimilarity metric is not rotation-independent, additional automated operations may be performed in some embodiments to ensure that information encoded in a given relative angular direction in one circular descriptor is being compared to a relative angular direction in the other circular descriptor that points in the same actual real-world direction. For example, in some embodiments, a brute force method could be used that compares each angular direction in one circular descriptor to a particular angular direction (*e.g.*, the starting direction) in the other circular descriptor, thus ensuring that one of the comparisons uses the same directions. Alternatively, in other embodiments automated operations may be performed to synchronize the two circular descriptors to be compared, such as by identifying which relative angular directions in one circular descriptor correspond to which relative angular directions in the other circular descriptor (*e.g.*, to identify, for the relative 0° starting angular direction for one circular descriptor, what the corresponding angular direction is in the other circular descriptor). With respect to the example of Figure 2E, such a determination may identify that the 0° starting direction for the image circular descriptor 279d (which corresponds to a westward direction) is the same as the 270° direction (or -90° direction) in each building location circular descriptor 278. Alternatively, in some embodiments a limited number of instances of a characteristic in the environment may be identified, with the angular direction to each such instance for one circular descriptor being compared to a corresponding instance in the other circular descriptor - an example of such a characteristic may be a direction that is orthogonal or normal to the plane of the wall (*e.g.*, identified by doing a vanishing point analysis using lines in the image), such as to have 4 such instances in a typical rectangular room for a 360° panorama image (*i.e.*, one for each wall, which are roughly 90° apart from each other). As another alternative, such a characteristic in the environment may be a type of wall element having only one or a limited number of instances, and the angular direction in one circular descriptor to each such instance may be compared to the angular direction for an instance of the same wall element type in the other circular descriptor - examples of such a characteristic may include a door (*e.g.*, a starting or ending edge of the door), an inter-wall border (*e.g.*, with four such instances typically occurring in a rectangular room), etc. In other embodiments, other distance metrics and/or similarity/dissimilarity metrics may be used, and other techniques may be used to synchronize corresponding information in two or more circular descriptors being compared.

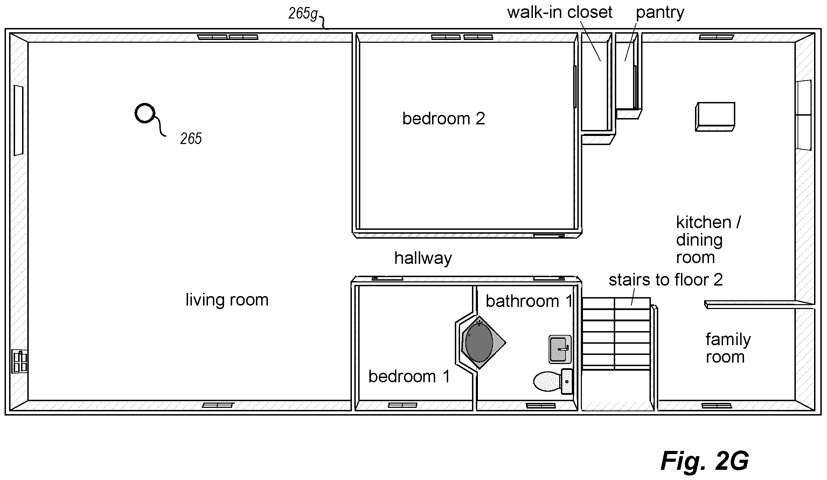

Figure 2F continues the examples of Figures 2A-2E, and illustrates one example of a 2D floor plan 230f for the house 198, such as may be presented to an end user in a GUI 255f, with the living room 260a being the most westward room of the house - it will be appreciated that a 3D or 2.5D floor plan showing wall height information may be similarly generated and displayed in some embodiments, whether in addition to or instead of such a 2D floor plan, with one example discussed with respect to Figure 2G. In this example, information has been added to the floor plan 255f to represent a position of the determined acquisition location 265 for the 360° panorama image 279d. In other embodiments and situations, location and/or orientation information for an image may be displayed in other manners, such as for the example perspective image on the south side of the living room that includes visual indicators of the directions covered in the perspective image, and/or for the additional panorama image in the northwest corner of the living room that shows an acquisition location and example starting orientation/direction information for that panorama image. When displayed as part of a GUI, the added information for the 360° panorama image 279d on the displayed floor plan may be a user-selectable control (or be associated with such a control) that allows an end user to select and display some or all of the associated 360° panorama image (*e.g.*, in a manner similar to that of Figure 2D).

Various other types of information are also illustrated on the 2D floor plan 255f in this example. For example, such other types of information may include one or more of the following: room labels added to some or all rooms (*e.g.*, "living room" for the living room); room dimensions added for some or all rooms; visual indications of fixtures or appliances or other built-in features added for some or all rooms; visual indications added for some or all rooms of positions of additional types of associated and linked information (*e.g.*, of other panorama images and/or perspective images that an end user may select for further display, of audio annotations and/or sound recordings that an end user may select for further presentation, etc.); visual indications added for some or all rooms of doors and windows; etc. In addition, in this example a user-selectable control 228 is added to indicate a current floor that is displayed for the floor plan, and to allow the end user to select a different floor to be displayed - in some embodiments, a change in floors or other levels may also be made directly from the floor plan, such as via selection of a corresponding connecting passage in the illustrated floor plan (*e.g.*, the stairs to floor 2). It will be appreciated that a variety of other types of information may be added in some embodiments, that some of the illustrated types of information may not be provided in some embodiments, and that visual indications of and user selections of linked and associated information may be displayed and selected in other manners in other embodiments.

Figure 2G continues the examples of Figures 2A-2F, and illustrates an example of a model 265g of a floor plan for the house 198 that includes height information (*e.g.*, as part of a 2.5D or 3D model floor plan of the house), such as may be presented to an end user in a GUI. Such a model 265g may, for example, be additional mapping-related information that is generated by the MIGM system based on the floor plan 230a and/or 230f, with additional information about height shown in order to illustrate visual locations in walls of features such as windows and doors. In this example, information has been added to the model 265g to represent a position of the determined acquisition location 265 for the 360° panorama image 279d. While not illustrated in Figure 2G, additional information may be added to the displayed walls in some embodiments, such as from images taken during the video capture (*e.g.*, to render and illustrate actual paint, wallpaper or other surfaces from the house on the rendered model 265), and/or may otherwise be used to add specified colors, textures or other visual information to walls or other surfaces.

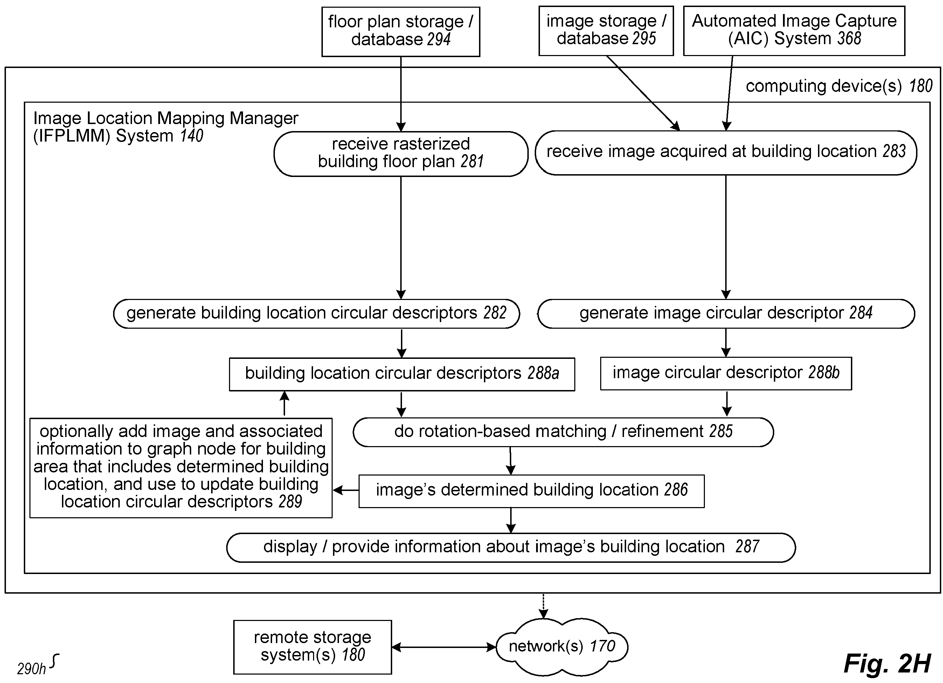

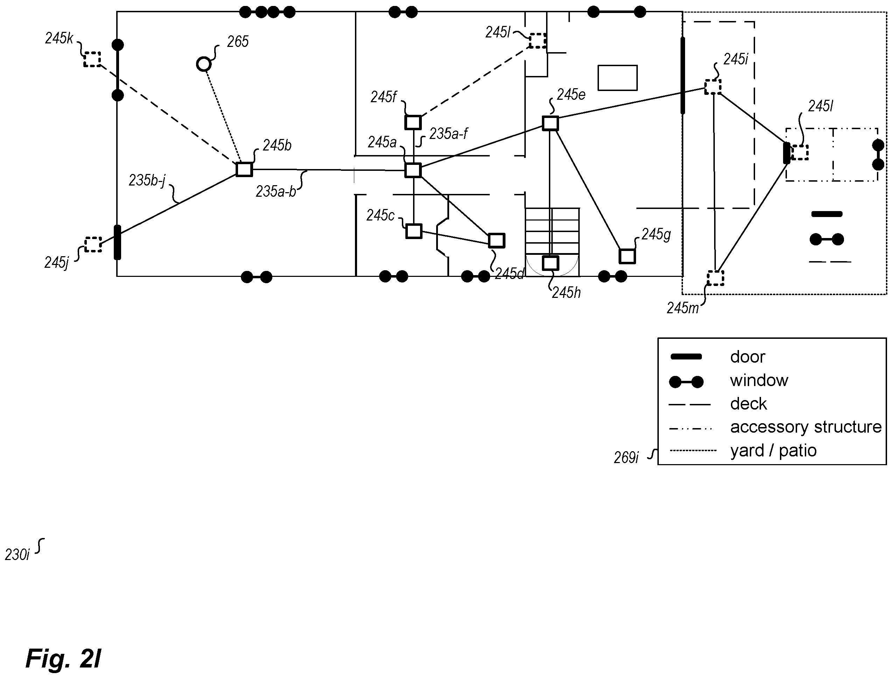

Figure 2H continues the examples of Figures 2A-2G, and illustrates information 290h that shows an example flow of information processing during automated operations of the IFPLMM system in at least some embodiments. In particular, in the example of Figure 2H, an embodiment of the IFPLMM system 140 is executing on one or more computing devices 180, and performs automated operations 281-285 to determine an image's acquisition location for a building, as well as operations 287 to display and/or provide corresponding information and optionally operations 289 to further use the determined image acquisition location to improve subsequent automated operations of the IFPLMM system. In particular, the IFPLMM system receives 281 a rasterized building floor plan (*e.g.*, from a database or other storage 294), and proceeds to generate 282 building location circular descriptors 288a for the building. In addition, the IFPLMM system receives 283 an image acquired at a location for the building, and proceeds to generate 284 an image circular descriptor 288b for the image. In step 285, the IFPLMM system does rotation-based matching of the circular descriptor 288b to circular descriptors 288a, optionally with location refinement, to determine an acquisition location 286 associated with the building for the image, and proceeds in step 287 to display or otherwise provide (*e.g.*, for storage, such as on one or more remote storage systems 180 over network(s) 170) the determined acquisition location. Additional details regarding such operations 281-285 are discussed with respect to Figures 2A-2G and elsewhere herein. The automated operations of the IFPLMM system may also optionally include using 289 the image and its determined acquisition location to improve subsequent processing by the IFPLMM system, such as to update the building location circular descriptors 288a for the room or other area that contains the determined acquisition location to further include features based on the visual data of the image using that determined acquisition location (*e.g.*, in a manner similar to the generation of the image circular descriptor 288b, but with the visual data projected onto the surrounding room or other area so that it may be individually determined for each of the building location circular descriptors being updated - Figure 2I provides additional details regarding such operations 289. While the example processing of Figure 2H is shown for only a single building and panorama image, it will be appreciated that similar processing can be performed for multiple buildings and/or multiple images (whether panorama images and/or perspective images), such as to determine acquisition location information for each of multiple images with respect to one or more candidate buildings in which that image was captured.

Figure 2I continues the examples of Figures 2A-2H, and illustrates information 230i that includes a floor plan of the building and that further illustrates information about an example graph 245 that has nodes 245a-245m for each of some or all of the building rooms or other areas. In particular, each node may represent a room or other building area, and optionally have inter-node edges that correspond to inter-room connectivity and/or inter-room adjacency (whether or not connectivity exists), with the edges in this example corresponding to inter-room connectivity (*e.g.*, such that node 245b for the living room 260a is connected to node 245a for the hallway, but not to node 245f for the adjacent room on the north side of the building). Once the acquisition location 265 is determined for the panorama image 250d, that panorama image and/or its image circular descriptor may be associated with the node 245b for the room or other area that contains that acquisition location, with visual data of that panorama image (*e.g.*, specific aspects of the visual data, such as color data or other pixel values, texture map data, etc.; latent space features generated from the visual data; etc.) then subsequently used in updating some or all of the building location circular descriptors for the living room (*e.g.*, to supplement existing latent space features determined from the floor map data, to replace some or all existing latent space features determined from the floor map data, etc.), as discussed in greater detail elsewhere herein. In other embodiments, such determined acquisition location for images may be used with building location circular descriptors in manners other than via such a graph, or such a graph may be structured in other manners (*e.g.*, with multiple nodes for some or all rooms or other areas; with nodes grouped hierarchically or in other manners, such as by floor or other grouping; etc.). In other embodiments, some or all of the building location circular descriptors may be updated in other manners (whether in addition to using visual data of images with determined acquisition locations, or instead of using such visual data), with one non-exclusive example involving adding information to such building location circular descriptors to include explicit indications of wall elements and/or other structural elements of the building (*e.g.*, windows, doorways and non-doorway openings, walls, inter-wall borders and/or other borders, etc.).

In addition, while at least some rooms of the house are represented with associated nodes in the adjacency graph, in at least some embodiments, some spaces within the house may not be treated as rooms for the purpose of the adjacency graph (*i.e.*, may not have separate nodes in the adjacency graph), such as for closets, small areas such as a pantry or a cupboard, connecting areas such as stairs and/or hallways, etc. - in this example embodiment, the stairs have a corresponding node 245h and a walk-in closet may optionally have a node 245l, while the pantry does not have a node, although none or all or any combination of those spaces may have nodes in other embodiments. In addition, in this example embodiment, areas outside of the building that are adjacent to building entries/exits also have nodes to represent them, such as node 245j corresponding to the front yard (which is accessible from the building by the entry door), and node 245i corresponding to the deck (which is accessible by the back door), as well as nodes 245l for an additional exterior structure and 245m for a larger backyard and/or patio - in other embodiments, such external areas may not be represented as nodes (and instead may be represented in some embodiments as attributes associated with adjacent exterior doors or other openings and/or with their rooms). Similarly, in this example embodiment, information about areas that are visible from windows or from other building locations may also be represented by nodes, such as optional node 245k corresponding to the view accessible from the western window in the living room, although in other embodiments such views may not be represented as nodes (and instead may be represented in some embodiments as attributes associated with the corresponding window or other building location and/or with their rooms). It will be noted that, while some edges are shown in Figure 2I as passing through walls (such as edge between the node 245a for the hallway and node 245f for the master bedroom in the north-center of the house), the actual connections between the rooms corresponding to the nodes that such an edge connects are based on a door or other non-door opening connection (*e.g.*, based on the interior door between the hallway and the master bedroom that is illustrated near the northeast end of the hallway). In addition, while not illustrated in information 230i, the adjacency graph for the house may further continue in other areas of the house that are not shown, such as the second floor. In some embodiments, each node may further have associated attributes, such as about the room or other area represented by the node, with non-exclusive examples including one or more of the following: room type; room dimensions; locations in the room of windows and doors and other inter-room openings; information about a shape of the room (whether about a 2D shape and/or 3D shape); a type of view for each window, and optionally direction information that each window faces; optionally direction information for doors and other inter-room openings; information about other features of the room, such as from analysis of associated images and/or information supplied by end-users who view the floor plan and optionally its associated images (*e.g.*, visual appearance and types of materials used, such as colors and/or textures and/or types for carpets or other floor materials and for wall coverings and for ceilings; etc.; light fixtures or other built-in elements; furniture or other items within the room; etc.); information about and/or copies of images taken in the room (optionally with associated location information within the room for each of the images); information about and/or copies of audio or other data captured in the room (optionally with associated location information within the room for each of the audio clips or other pieces of data); etc. Similarly, in some embodiments, each edge may further have associated attributes, such as related to the inter-area connection represented by the edge, with non-exclusive examples including one or more of the following: an inter-room connection type (*e.g.*, doorway, non-doorway opening, etc.); inter-room connection dimensions (*e.g.*, width; height and/or depth); etc.

In addition, further automated operations may be performed in at least some embodiments as part of an automated determination of the acquisition location of an image captured in a room or other building area, such as if corresponding information about a building's room or other area is available. For example, in at least some embodiments, a geometric localization technique may be used to test associations of wall elements visible in an image to wall elements present in a room, whether to confirm a degree of match for a building location circular descriptor that has already been determined to be a best match for an image circular descriptor and/or as part of the identification of such a best match building location circular descriptor. The geometric localization technique may include, for example, determining one or more likely room shapes of a room and/or positions of elements within the room using 2-point solvers and/or 3-point solvers (or alternatively receiving such information as a starting point), and then positioning the wall elements on the likely room shape(s) - in other embodiments, the wall element locations may be determined in other manners, such as via use of depth sensing equipment or other room mapping sensors in the room, via a machine learning approach for analysis of images to identify room shapes and wall element locations, via input specified by one or more human operators, etc. Furthermore, in some embodiments, given a room location and information about a room shape and the locations of wall elements, a new synthetic image that is a projection/visualization of a view of the room from that room location may be generated with the wall elements shown in their locations, and the visual information of that synthetic image may be directly compared to the actual image from the room to determine a degree of similarity/dissimilarity or other degree of match between the two images, with that inter-image comparison used to determine if that room location is a match for the acquisition location of the actual image. In a similar manner, in some embodiments, some or all of the building location circular descriptors for room locations in a room may be generated as image circular descriptors of images (*e.g.*, 360° panorama images) taken at those room locations, and those room/image circular descriptors may then be compared to an image circular descriptor of a new image taken in the room (*e.g.*, an image with less than 360° of horizontal coverage) to determine a best match building location circular descriptor in a manner similar to that discussed above.

The automated determination of the acquisition location of an image taken in a room may further include additional operations in some embodiments. For example, in at least some embodiments, machine learning techniques may be used to learn the best encoding to allow matching of an image to a room location, such as from among multiple defined candidate encodings, or instead by considering a variety of possible features and identifying a subset of those image features that provide best matches to corresponding room locations. Additional details are included below regarding various automated operations that may be performed by the IFPLMM system in at least some embodiments.

As one non-exclusive example embodiment, determining a target image's acquisition location within a room (also referred to as 'localization' for the purpose of this example embodiment) may include estimating 2D camera pose $p^*$, associated with target image $I$, with respect to a reference structural layout (or 'map') $M$. Camera pose $p = [t, \theta] \in SE(2)$ is modeled within a 2D plane, having a rotation $\theta$ [0, $2\pi$) in yaw axis and a translation $t = [x, y]$, with the pose parameters $t \in R^2$ and $\theta \in [0, 2\pi)$ defining, respectively, the camera's planar displacement vector and yaw axis rotation. The target image may be either a panorama image (*e.g.*, in equirectangular format) or a perspective image with a known Field of View (FoV). Map $M$ can have various formats, and encodes the structural layout information (also referred to as 'occupancy' for the purpose of this example embodiment) within a 2D plane.

The determination of the target image's acquisition location in this example embodiment includes using a Monte Carlo Localization (MCL) framework, which defines a measurement model $P ( I | p ; M)$ that expresses the likelihood of image $I$ observed at camera pose $p$ on a map $M$, with the non-random parameter $M$ being excluded below for simplicity. The posterior distribution of $p$ after observing $I$ is the solution of interest, and the MCL framework estimates the posterior distribution $P (p | I)$ based on the Bayes' formula as follows:

$$P(\mathbf{p} \mid \mathbf{I}) = \frac{P(\mathbf{I} \mid \mathbf{p})P(\mathbf{p})}{P(\mathbf{I})} \qquad (1)$$

where $P(I)$ is a normalization constant that can be ignored, and $P(p)$ is the prior camera pose distribution on the map, which is assumed to be uniformly distributed within the map area. Finally, the full posterior can be approximated by drawing particles from $P (p)$ whose likelihoods will be estimated using the measurement model as defined in Equation (5) below.

Under the metric learning framework, instead of using a flattened descriptor used in metric learning, a circular feature is used to encode spatial visibility, leading to the metric learning being geometrically interpretable. A circular feature is defined as an ordered set of feature vectors as follows:

$$\mathsf{F} = \{\ f^\alpha \mid \alpha = 1 \cdots V\text{-}1\ \} \qquad (2)$$

where $V$ is the number of feature segments. Each feature segment $f^\alpha \in R^D$ encodes a local directional FoV of $2\pi / V$ rads in the range ($2\pi\alpha / V$) to (($2\pi * (\alpha+1)) / V$) on the 2D plane. This ordered set F is referred to as a circular feature in this example embodiment since the first and last feature segments correspond to adjacent FoVs. The ordered feature segments correspond to the 360° 2D spatial information, and $V$ is the number of segments. With this design, the omni-directional 2D spatial information is implicitly encoded in the order of feature segments.

A similarity measurement between two circular features $F_i = \{\ f_i^\alpha \mid \alpha = 0 \cdots V\text{-}1\ \}$ and $F_j = \{\ f_j^\alpha \mid \alpha = 0 \cdots V\text{-}1\ \}$ is defined as follows:

$$\mathcal{S}(\mathbb{F}_i, \mathbb{F}_j) = \frac{\sum_{\alpha=1}^{V} cos(\mathbf{f}_i^\alpha, \mathbf{f}_j^\alpha)}{2V} + 0.5 \qquad (3)$$

where cos(.,.) computes the vector cosine similarity, and the function output is normalized to [0, 1]. A rotation operator R(F, θ) is defined that rotates the underlying spatial information of a circular feature F with a given angle θ by

$$\mathcal{R}(\mathbb{F}, \theta) = \{\mathbf{f}^{(\alpha + \frac{V\theta}{2\pi})\%V} \mid \alpha = 0 \cdots V - 1\} \qquad (4)$$

where the 1D feature space is linearly interpolated when indexing yields non-integer values. Finally, the measurement model is defined as

$$P(\mathbf{I} \mid \mathbf{p}) = P(\mathbf{I} \mid \mathbf{t}, \theta) = A \cdot \mathcal{S}(\mathbb{F_I}, \mathcal{R}(\mathbb{F_t}, \theta)) \qquad (5)$$

where A is the PDF normalization constant, and $F_I$ and Ft are circular features encoded from the target image and rendered at location $t$ on the map respectively.

To systematically reduce the rotation dimension from the MCL sampling step (since MCL uses a large number of samples to approximate the camera pose posterior in *SE*(2)), and for a sample location $t$ with a canonical orientation, the optimal relative rotation of its circular feature $F_t$ with respect to an image circular feature $F_I$ can be found by

$$\theta_{\mathbf{t}}^{opm} = \underset{\theta_{\mathbf{t}}}{argmax}\, \mathcal{S}(\mathbb{F_I}, \mathcal{R}(\mathbb{F_t}, \theta_{\mathbf{t}})) \qquad (6)$$

Substitute to Equation 5 provides a simplified measurement model obviating $\theta$ and that is only conditioned on translation $t$ as

$$P(\mathbf{I} \mid \mathbf{t}) = A' \cdot \mathcal{S}(\mathbb{F_I}, \mathcal{R}(\mathbb{F_t}, \theta_{\mathbf{t}}^{opm})) \qquad (7)$$

For solving Equation 6, $F_t$ is rotated with uniformly sampled $\theta_t$ in [0, $2\pi$), and the best is kept. This discretized search initializes rotation to a rough value, which will later be refined as discussed below. The rotation matching process is highly efficient since it reuses the same circular feature and does not render new hypotheses.

Circular features are rendered from 2D floor maps with a given camera pose in the following manner. Given a general 2D map representation *M* (*e.g.,* floor plan, occupancy grid, etc.) that encodes the area occupancy information, points are uniformly sampled on the occupancy boundaries (*e.g.*, walls) to extract a 2D point cloud set $M = \{ m_i \mid i = 0 \ldots N\text{-}1 \}$. Each point $m_i = [t_i, n_i, s_i]$ encodes its location $t_i$, normal vector $n_i$ and an optional semantic information $s_i$. The normal vector is normalized pointing inside the room. When semantic information (*e.g.*, labels and/or positions for doors, windows, etc.) is available, it is encoded as binary masks appended to the point representation.

To circumvent inefficient two-stage render-and-encode processes, a latent space rendering is used that directly renders circular feature vectors by aggregating features from visible map points. However, visibility for static environments is locally constant at most sampling locations, providing a limited spatial context, so detailed rendering dynamics (such as length and incident-angle of the viewing rays between features and sampling location) are analyzed to mitigate potential homogenization of the representations, and an adaptive rendering mechanism is defined. Hence, a rendering codebook is used that corresponds to an over-specified latent feature space in order to endow map points with view-dependent adaptive features encoding rendering dynamics (*e.g.*, using the features of map points during rendering as determined by the codebook and rendering dynamics, with features from multiple codebooks mixed with addition). The 2D point cloud map is processed (*e.g.*, with a PointNet) to assign each map point $m_i$ two sets of latent features

$G_i = \{ g_i^{\beta} \mid \beta = 0 \cdots G\text{-}1 \}$ and $H_i = \{ h_i^{\gamma} \mid \gamma = 0 \cdots H\text{-}1 \}$, which is denoted as distance and incident-angle codebook respectively. Features in the codebook have the same dimension as circular feature segments $g^{\beta}, h^{\gamma} \in R^D$. At rendering time, the map point features are chosen from the codebooks based on their distance and incident-angle with respect to the rendering location. Assuming a rendering location t^ and a map point $m_i = [t_i, n_i, s_i]$, let $d_i = t_i - t^{\wedge}$, its rendering dynamics are computed as

$$d_i = \| \mathbf{d}_i \| \qquad (8)$$

$$\psi_i = atan2(\| \mathbf{d}_i \times \mathbf{n}_i \|, \mathbf{d}_i \cdot \mathbf{n}_i) \qquad (9)$$

where $d_i$ and $\psi_i$ are distance and incident-angle respectively. The clockwise incident-angle [0, $2\pi$) distinguishes the four

quadrants. With $m_i$'s associated codebooks $G_i$ and $H_i$, its feature $f_i$ is then determined by

$$\mathbf{f}_i = \mathbf{g}_i^{\frac{G\psi_i}{2\pi}} + \mathbf{h}_i^{min(\frac{Hd_i}{d_{max}}, H)} \qquad (10)$$

where $d_{max}$ is a predefined maximum distance for the distance codebook. Similar to Equation 4, for non-integer indexing, linear interpolation between its two closest codes in the codebook may be used. Finally, if $m_i$ passes the visibility test to location t^, $f_i$ is projected to circular feature $F_{\hat{t}} = \{ f_i^\alpha \mid \alpha = 0 \cdots V\text{-}1 \}$ by

$$\mathbf{f}_{\hat{\mathbf{t}}}^{\frac{V\omega_i}{2\pi}} = \mathbf{f}_i \qquad (11)$$

where $\omega_i = atan2(d_i)$ is the angle of viewing ray. Finally, the projected map point features are averaged into each segment.

Circular features are extracted from panorama and/or perspective images in the following manner. For panorama images in equirectangular projection, each image column in the image corresponds to a fixed amount of horizontal FoV. Such capture configuration facilitates a bijective mapping between groups of adjacent input image columns and the segments in the rendered circular representation. The query panorama is fed into an encoder (*e.g.*, a ResNet50 encoder) to obtain a feature map, which is subsequently squeezed by averaged pooling in the vertical dimension to comply with the feature dimensions of the circular segments, and averaged-pooled again in the horizontal direction to *V* elements, in accordance with the preconfigured number of feature segments in each circular feature.

Perspective images are the most common images that taken from cameras subject to the pinhole camera model, which has additional degrees of freedoms in camera rotation compared to panorama images. If an image is assumed to have known FoV and zero pitch/roll angle related to the ground plane, each image column in the perspective image will correspond to a non-fixed but known amount of horizontal FoV - note that for indoor target images, the pitch/roll angle can usually be rectified by estimating the room layout. The target image may be processed to a feature map (*e.g.*, using a ResNet50 encoder), and average pooling may be used to squeeze the vertical dimension, with a perspective-to-equirectangular transform on the feature map to get the final circular feature. Since perspective images have significantly less than 360° FoV, their circular features will have segments without assigned values, which will be masked out in the computation. Equation 3 can also be re-normalized to have range [0, 1].

The accuracy of the Monte-Carlo localization framework can depend on the sampling density, but it can be inefficient to achieve a high accuracy using sampling. A lightweight continuous refinement branch is used to address the discretized pose sampling nature of the MCL processing, to improve upon a current estimation. With current best estimation $t^*$ and $\theta^*$, the refinement branch takes two circular features $F_I$ and $\mathcal{R}(F_t{}^*, \theta_*)$ as input. The refinement network uses two 1D convolution layers with circular padding followed by a fully-connected layer to predict two offsets $\delta t$, $\delta\theta$ for translation and rotation respectively. The updated map circular feature $F_{t^*}+\delta t$, $\theta^*+\delta\theta$ is then rendered, and its similarity is computed to $F_I$ using Equation 3. If the similarity score improved upon the original camera pose, it is accepted and iteration continues (*e.g.*, with converging often occurring within 3 iterations, and with the first refinement accepted in at least some situations to unquantize the estimation), and otherwise the refinement is treated as being converged.

Triplet loss may be used as supervision for learning the metric space. To form a triplet, the image circular feature $F_I$ is used as the anchor, the map circular feature at ground truth camera pose $F^+ = \mathcal{R}(F_{t_{gt}}, \theta_{gt})$ is used as a positive feature and a negative map circular feature $F^- = \mathcal{R}(F_{t_{rnd}}, \theta_{rnd})$ is used at an outlier camera pose. Then the triplet loss is defined by

$$\mathcal{L}_{triplet} = 2 \cdot max\Big( \mathcal{S}\big(\mathbb{F}_\mathbf{I}, \mathbb{F}^+\big) - \mathcal{S}\big(\mathbb{F}_\mathbf{I}, \mathbb{F}^-\big) + 0.5, \ 0 \Big) \quad (12)$$

The similarity function *S* and triplet loss $L_{triplet}$ uses aggregated element-wise comparisons, and thus effectively disregards any intra-feature context. An additional context loss can be used to provide feature segments a global scope of their circular features for learning context information (*e.g.*, properties of the room/map). Circular feature context F is defined as the mean of its normalized feature segments

$$\overline{\mathbb{F}} = \frac{\sum_{\alpha=1}^{V} \mathbf{f}^\alpha / \|\mathbf{f}^\alpha\|}{V}, \qquad (13)$$

which is applied to training triplets in a manner similar to Equation 12.

$$\mathcal{L}_{context} = max\left(cos(\overline{\mathbb{F}}_{\mathbf{I}}, \overline{\mathbb{F}}^{+}) - cos(\overline{\mathbb{F}}_{\mathbf{I}}, \overline{\mathbb{F}}^{-}) + 1.0, 0\right) \quad (14)$$

With the context loss, the circular features achieve better coarse level expressiveness, improving recall for target images with limited FoV. This loss also acts as a regularizer by mitigating feature segments having large variance, leading to a smoother posterior estimation.

For training the refinement branch, circular features within a 0.5 meter radius and a 30 degree angle from the ground truth camera pose are sampled, and the refinement branch is supervised using a regression loss as

$$\mathcal{L}_{refine\_t} = \left\|(\mathbf{t}_{gt} - \mathbf{t}^{*}) - \delta\mathbf{t}\right\|$$

$$\mathcal{L}_{refine\_r} = min\left(\left|(\theta_{gt} - \theta^{*}) - \delta\theta\right|, 2\pi - \left|(\theta_{gt} - \theta^{*}) - \delta\theta\right|\right)$$
$$(15)$$

For triplet and context loss, 100 negative samples are sampled and broadcast the single ground truth sample for each training iteration. For refinement loss, 20 hard negatives are sampled near the ground truth camera pose with a disturbance sampled from uniform distribution bounded in 30 degree and 0.5 meter radius. The mean of all losses is combined with equal weights, and hyper-parameters are set as $G = H = 32$, $V = 16$, $D = 128$ and $d_{max} = 10m$ consistently through benchmarking. The map is sampled into a 2D point cloud with a 10cm interval at occupancy boundaries. Circular features are rendered for a $0.1m \times 0.1m$ uniform grid within the map range. For estimating relative rotations as described in Equation 6, 16 uniformly sampled angle are evaluated and the best is kept. Finally, the posterior distribution can be estimated using Equations 1 and 7. To extract final estimations from the posterior grid map, a 3 x 3 non-maximum suppression is applied to extract the maximums. For maximums that have a larger score than a threshold (*e.g.*, 0.8), they are sent into the refinement branch to get the final estimations with their likelihoods as uncertainty estimation. Sorting by their likelihoods, a top-k estimation is available. While this example embodiment discussed above may in some situations use a binary occlusion status with respect to a viewing ray from a map location, other embodiments and/or situations may further support partial occlusion, such as by modeling map objects (*e.g.*, furniture). In addition, while this example embodiment discussed above may in some situations not use information about whether doors are open or not, other embodiments and/or situations may utilize such information. Furthermore, while this example embodiment discussed above may in some situations use 2D floor maps, other embodiments and/or situations may be extended to 3D space and/or model complex rendering-time dynamics such as non-Lambertian reflection (*e.g.*, mirrors).

Various details have been provided with respect to Figures 2A-2I and with respect to the non-exclusive example embodiment discussed above, but it will be appreciated that the provided details are non-exclusive examples included for illustrative purposes, and other embodiments may be performed in other manners without some or all such details.

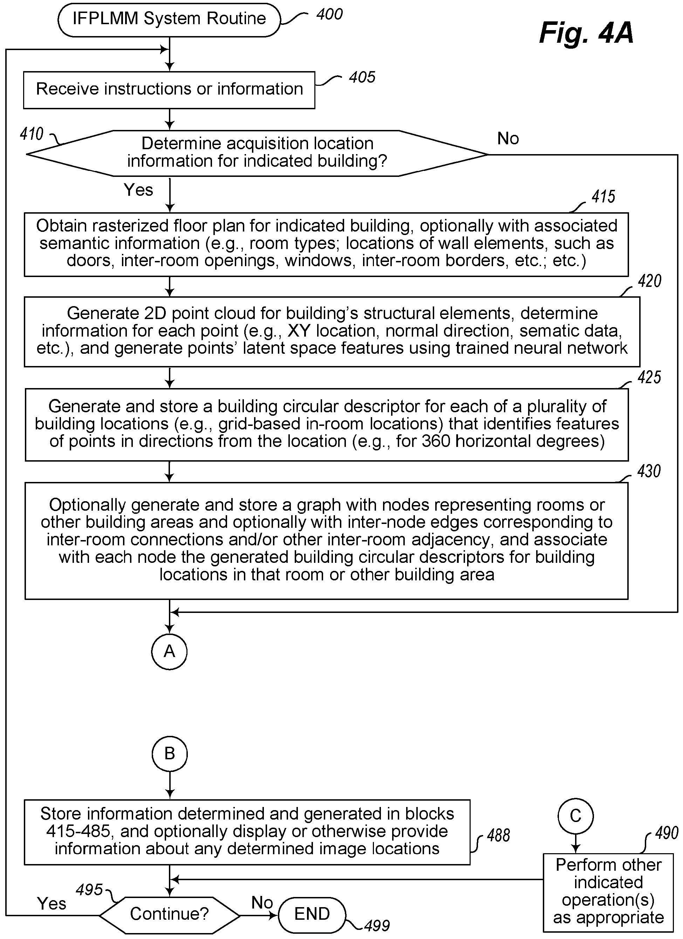

Figure 1 is an example block diagram of various computing devices and systems that may participate in the described techniques in some embodiments. In particular, Figure 1 illustrates an IFPLMM (Image Location Mapping Manager) system 140 that is executing on one or more server computing systems 180 to determine mapped acquisition locations of images 145 (*e.g.*, panorama images) acquired in one or more building rooms or other building areas, such as acquisition locations that are specified with respect to corresponding building floor plans 155. In at least some embodiments and situations, one or more users of IFPLMM system client computing devices 105 may further interact over the network(s) 170 with the IFPLMM system 140, such as to assist with some of the automated operations of the IFPLMM system and/or to subsequently initiate using the determined image acquisition location information in one or more further automated manners. Additional details related to the automated operation of the IFPLMM system are included elsewhere herein, including with respect to Figures 2A2D-2I and Figures 4A-4B.

In addition, Figure 1 further illustrates optional Interior Capture and Analysis ("ICA") and/or MIGM (Mapping Information Generation Manager) systems 160 executing in this example on one or more server computing systems 180 (whether the same or different server computing system(s) executing the IFPLMM system 140), such as to capture images (*e.g.*, one or more 360° panorama images 165, optionally linked with inter-panorama image relative position information) with respect to one or more buildings or other structures and/or to generate and provide building floor plans 154 and/or other mapping-related information (*e.g.*, based on use of the panorama images 165 and optionally associated metadata about their acquisition and linking), respectively - Figure 1 shows one example of such panorama images for a particular house 198, as discussed further below, and Figures 2F and 2G showing examples of enhanced building floor plans, with additional details related to the automated operations of the ICA and MIGM systems included elsewhere herein. In some embodiments, the ICA system 160 and/or MIGM system 160 and/or IFPLMM system 140 may execute on the same server computing system(s) and the IFPLMM system may optionally obtain some or all of the images 145 and/or floor plans 155 from the ICA and MIGM systems, respectively, such as if multiple or all of those systems are operated by a single entity or are otherwise executed in coordination with each other (*e.g.*, with some or all functionality of those systems integrated together into a larger system), while in other embodiments the IFPLMM system may instead obtain floor plan information and/or images from one or more other external sources without any such ICA or MIGM system involvement and store them locally with the IFPLMM system for further analysis and use.

One or more users (not shown) of one or more client computing devices 175 may further interact over one or more computer networks 170 with the IFPLMM system 140 and optionally the ICA system 160 and/or MIGM system 160, such as to obtain and use determined acquisition location information for images (*e.g.*, to obtain and view and optionally interact with one or more such images and/or a generated floor plan on which the one or more images have been located, such as to optionally perform one or more of the following: to change between a floor plan view and a view of a particular image at an acquisition location within or near the floor plan; to change the horizontal and/or vertical viewing direction from which a corresponding view of a panorama image is displayed, such as to determine a portion of a panorama image to which a current user viewing direction is directed, etc.). In addition, while not illustrated in Figure 1, a floor plan (or portion of it) may be linked to or otherwise associated with one or more other types of information, including for a floor plan of a multi-story or otherwise multi-level building to have multiple associated sub-floor plans for different stories or levels that are interlinked (*e.g.*, via connecting stairway passages), for a two-dimensional ("2D") floor plan of a building to be linked to or otherwise associated with a three-dimensional ("3D") rendering of the building, etc. In addition, while not illustrated in Figure 1, in some embodiments the client computing devices 175 (or other devices, not shown), may receive and use determined image acquisition location information (optionally in combination with generated floor plans and/or other generated mapping-related information) in additional manners, such as to control or assist automated navigation activities by those devices (*e.g.*, by autonomous vehicles or other devices), whether instead of or in addition to display of the generated information.

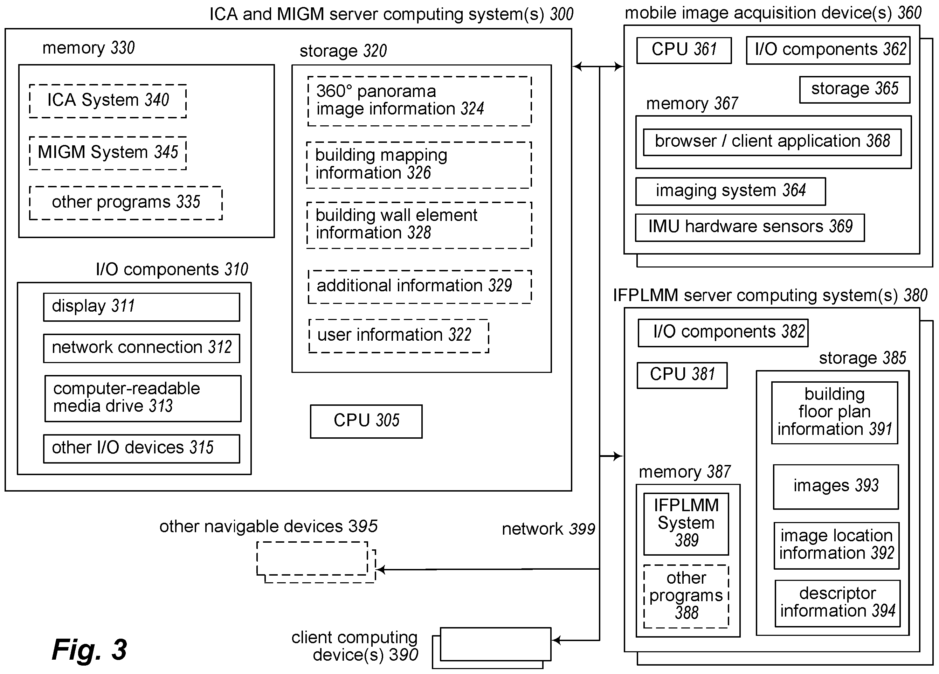

In the depicted computing environment of Figure 1, the network 170 may be one or more publicly accessible linked networks, possibly operated by various distinct parties, such as the Internet. In other implementations, the network 170 may have other forms. For example, the network 170 may instead be a private network, such as a corporate or university network that is wholly or partially inaccessible to non-privileged users. In still other implementations, the network 170 may include both private and public networks, with one or more of the private networks having access to and/or from one or more of the public networks. Furthermore, the network 170 may include various types of wired and/or wireless networks in various situations. In addition, the client computing devices 175 and server computing systems 180 may include various hardware components and stored information, as discussed in greater detail below with respect to Figure 3.

In the example of Figure 1, if ICA system 160 is present it may perform automated operations involved in generating multiple panorama images (*e.g.*, each a 360° panorama around a vertical axis) at multiple associated acquisition locations (*e.g.*, in multiple rooms or other locations within a building or other structure and optionally around some or all of the exterior of the building or other structure), such as for use in generating and providing a representation of an interior of the building or other structure. The techniques may further include analyzing information to determine relative positions/directions between each of two or more acquisition locations, creating inter-panorama positional/directional links in the panoramas to each of one or more other panoramas based on such determined positions/directions, and then providing information to display or otherwise present multiple linked panorama images for the various acquisition locations within the house.

Figure 1 depicts a block diagram of an exemplary building interior environment in which panorama images have been generated and optionally linked and are ready for use to generate and provide a corresponding building floor plan, as well as for use in presenting the panorama images to users. In particular, Figure 1 includes a building 198 with an interior that was captured at least in part via multiple panorama images, such as by a user (not shown) carrying a mobile device 185 with image acquisition capabilities through the building interior to a sequence of multiple acquisition locations 210. An embodiment of the ICA system (*e.g.*, ICA system 160 on server computing system(s) 180; a copy of some or all of the ICA system executing on the user's mobile device, such as ICA application system 155 executing in memory 152 on device 185; etc.) may automatically perform or assist in the capturing of the data representing the building interior, as well as optionally further analyze the captured data to generate linked panorama images providing a visual representation of the building interior. While the mobile device of the user may include various hardware components, such as a camera or other imaging system 135, one or more sensors 148 (*e.g.*, a gyroscope 148a, an accelerometer 148b, a compass 148c, etc., such as part of one or more IMUs, or inertial measurement units, of the mobile device; an altimeter; light detector; etc.), a GPS receiver, one or more hardware processors 132, memory 152, a display 142, a microphone, etc., the mobile device may not in at least some embodiments have access to or use equipment to measure the depth of objects in the building relative to a location of the mobile device, such that relationships between different panorama images and their acquisition locations may be determined in part or in whole based on matching elements in different images and/or by using information from other of the listed hardware components, but without using any data from any such depth sensors, while in other embodiments the mobile device may have one or more sensors used to measure depth to surrounding walls and other surrounding objects. In addition, while directional indicator 109 is provided for reference of the viewer, the mobile device and/or ICA system may not use such absolute directional information in at least some embodiments, such as to instead determine relative directions and distances between panorama images 210 without regard to actual geographical positions or directions.

In operation, a user associated with the mobile device arrives at a first acquisition location 210A within a first room of the building interior (in this example, an entryway from an external door 190-1 to the living room), and captures a view of a portion of the building interior that is visible from that acquisition location 210A (e.g., some or all of the first room, and optionally small portions of one or more other adjacent or nearby rooms, such as through doors, halls, stairs or other connecting passages from the first room) as the mobile device is rotated around a vertical axis at the first acquisition location (e.g., with the user turning his or her body in a circle while holding the mobile device stationary relative to the user's body). The actions of the user and/or the mobile device may be controlled or facilitated via use of one or more programs executing on the mobile device, such as ICA application system 154, optional browser 162, control system 147, etc., and the view capture may be performed by recording a video and/or taking a succession of one or more images, including to capture visual information depicting a number of objects or other elements (e.g., structural details) that may be visible in images (e.g., video frames) captured from the acquisition location. In the example of Figure 1, such objects or other elements include various elements that are structurally part of the walls (or "wall elements"), such as the doorways 190 and 197 and their doors (e.g., with swinging and/or sliding doors), windows 196, inter-wall borders (e.g., corners or edges) 195 (including corner 195-1 in the northwest corner of the building 198, and corner 195-2 in the northeast corner of the first room) - in addition, such objects or other elements in the example of Figure 1 may further include other elements within the rooms, such as furniture 191-193 (e.g., a couch 191; chair 192; table 193; etc.), pictures or paintings or televisions or other objects 194 (such as 194-1 and 194-2) hung on walls, light fixtures, etc. Such a panorama image may, for example, be provided as input to the IFPLMM system, for use in automatically determining the acquisition location of the panorama image relative to a floor plan of the house 198 (assuming that such a floor plan is available to the IFPLMM system).

With respect to such a captured panorama image, the user may also optionally in some embodiments provide a textual or auditory identifier to be associated with the panorama image and/or its acquisition location, such as "entry" for acquisition location 210A or "living room" for acquisition location 210B, while in other embodiments the ICA system may automatically generate such identifiers (e.g., by automatically analyzing video and/or other recorded information for a building to perform a corresponding automated determination, such as by using machine learning) or the identifiers may not be used. After the first acquisition location 210A has been adequately captured (e.g., by a full rotation of the mobile device), the user may optionally proceed to a next acquisition location (such as acquisition location 210B), optionally recording movement data during movement between the acquisition locations, such as video and/or other data from the hardware components (e.g., from one or more IMUs, from the camera, etc.). At the next acquisition location, the user may similarly use the mobile device to capture one or more images from that acquisition location. This process may repeat from some or all rooms of the building and optionally external to the building, as illustrated for acquisition locations 210C-210L, including in this example to capture one or more panorama images on an external deck or patio or balcony 186, to capture one or more panorama images on a larger external yard or patio 187, to capture one or more panorama images near or in an external additional structure 188 (e.g., a garage, shed, accessory dwelling unit, greenhouse, etc.). The acquired video and/or other images for each acquisition location are further analyzed to generate a panorama image for each of acquisition locations 210A-210L, including in some embodiments to match objects and other elements in different images. In addition to generating such panorama images, further analysis may be performed in order to 'link' at least some of the panoramas together (with some corresponding lines 215 between them being shown for the sake of illustration), such as to determine relative positional information between pairs of acquisition locations that are visible to each other, to store corresponding inter-panorama links (e.g., links 215-AB, 215-BC and 215-AC between acquisition locations A and B, B and C, and A and C, respectively), and in some embodiments and situations to further link at least some acquisition locations that are not visible to each other (e.g., a link 215-BE, not shown, between acquisition locations 210B and 210E).

Various details are provided with respect to Figure 1, but it will be appreciated that the provided details are non-exclusive examples included for illustrative purposes, and other embodiments may be performed in other manners without some or all such details.

Figure 3 is a block diagram illustrating an embodiment of one or more server computing systems 380 executing an implementation of an IFPLMM system 389, and optionally one or more server computing systems 300 executing an implementation of an ICA system 340 and an MIGM system 345 - the server computing system(s) and IFPLMM system may be implemented using a plurality of hardware components that form electronic circuits suitable for and configured to, when in combined operation, perform at least some of the techniques described herein. In the illustrated embodiment, each server computing system 300 includes one or more hardware central processing units ("CPU") or other hardware processors 305, various input/output ("I/O") components 310, storage 320, and memory 330, with the illustrated I/O components including a display 311, a network connection 312, a computer-readable media drive 313, and other I/O devices 315 (e.g., keyboards, mice or other pointing devices, microphones, speakers, GPS receivers, etc.). Each server computing system 380 may include hardware components similar to those of a server computing system 340, including one or more hardware CPU processors 382, various I/O components 382, storage 385 and memory 387, but with some of the details of server computing systems 300 being omitted in server computing systems 380 for the sake of brevity.

The server computing system(s) 380 and executing IFPLMM system 389 may communicate with other computing systems and devices via one or more networks 399 (*e.g.*, the Internet, one or more cellular telephone networks, etc.), such as user client computing devices 390 (*e.g.*, used to view floor plans, associated images and/or other related information), ICA and MIGM server computing system(s) 300, one or more mobile image acquisition devices 360, optionally other navigable devices 395 that receive and use floor plans and determined image acquisition locations and optionally other generated information for navigation purposes (*e.g.*, for use by semi-autonomous or fully autonomous vehicles or other devices), and optionally other computing systems that are not shown (*e.g.*, used to store and provide additional information related to buildings; used to capture building interior data; used to store and provide information to client computing devices, such as additional supplemental information associated with images and their encompassing buildings or other surrounding environment; etc.).

In the illustrated embodiment, an embodiment of the IFPLMM system 389 executes in memory 387 in order to perform at least some of the described techniques, such as by using the processor(s) 381 to execute software instructions of the system 389 in a manner that configures the processor(s) 381 and computing system 380 to perform automated operations that implement those described techniques. The illustrated embodiment of the IFPLMM system may include one or more components, not shown, to each perform portions of the functionality of the IFPLMM system, and the memory may further optionally execute one or more other programs 388 - as one specific example, copies of the ICA and/or MIGM systems may execute as one of the other programs 388 in at least some embodiments, such as instead of or in addition to the ICA system 340 and MIGM system 345 on the server computing system(s) 300. The IFPLMM system 389 may further, during its operation, store and/or retrieve various types of data on storage 385 (*e.g.*, in one or more databases or other data structures), such as various types of floor plan information and other building mapping information 391 (*e.g.*, generated and saved 2D floor plans and semantic information about positions of wall elements and other elements on those floor plans, generated and saved 2.5D and/or 3D models, building and room dimensions for use with associated floor plans, additional images and/or annotation information, etc.), information 393 about images whose acquisition locations are to be determined and associated information 392 about such determined acquisition locations, information 394 about generated building location circular descriptors and image circular descriptors, and optionally various other types of information. The ICA system 340 and/or MIGM system 345, if present, may similarly store and/or retrieve various types of data on storage 320 (*e.g.*, in one or more databases or other data structures) during their operation and provide some or all such information to the IFPLMM system 389 for its use (whether in a push and/or pull manner), such as various types of floor plan information and other building mapping information 326 (*e.g.*, similar to or the same as information 391), various types of user information 322, acquired 360° panorama image information 324 (*e.g.*, for analysis to generate floor plans; to provide to users of client computing devices 390 for display; etc., optionally including information about inter-panorama image links that reflect relative positional information for the panorama images), and/or various types of optional additional information 329 (*e.g.*, various analytical information related to presentation or other use of one or more building interiors or other environments captured by an ICA system).

Some or all of the user client computing devices 390 (*e.g.*, mobile devices), mobile image acquisition devices 360, other navigable devices 395 and other computing systems may similarly include some or all of the same types of components illustrated for server computing systems 300 and 380. As one non-limiting example, the mobile image acquisition devices 360 are each shown to include one or more hardware CPU(s) 361, I/O components 362, storage 365, imaging system 364, IMU hardware sensors 369, and memory 367, with one or both of a browser 368 and one or more client applications 369 (*e.g.*, an application specific to the IFPLMM system and/or ICA system) executing within memory 367, such as to participate in communication with the IFPLMM system 389, ICA system 340 and/or other computing systems. While particular components are not illustrated for the other navigable devices 395 or client computing systems 390, it will be appreciated that they may include similar and/or additional components.

It will also be appreciated that computing systems 300 and 380 and the other systems and devices included within Figure 3 are merely illustrative and are not intended to limit the scope of the present invention. The systems and/or devices may instead each include multiple interacting computing systems or devices, and may be connected to other devices that are not specifically illustrated, including via Bluetooth communication or other direct communication, through one or more networks such as the Internet, via the Web, or via one or more private networks (*e.g.*, mobile communication networks, etc.). More generally, a device or other computing system may comprise any combination of hardware that may interact and perform the described types of functionality, optionally when programmed or otherwise configured with particular software instructions and/or data structures, including without limitation desktop or other computers (*e.g.*, tablets, slates, etc.), database servers, network storage devices and other network devices, smart phones and other cell phones, consumer electronics, wearable devices, digital music player devices, handheld gaming devices, PDAs, wireless phones, Internet appliances, and various other consumer products that include appropriate communication capabilities. In addition, the functionality provided by the illustrated IFPLMM system 389 may in some embodiments be distributed in various components, some of the described functionality of the IFPLMM system 389 may not be provided, and/or other additional functionality may be provided.

It will also be appreciated that, while various items are illustrated as being stored in memory or on storage while being used, these items or portions of them may be transferred between memory and other storage devices for purposes of memory management and data integrity. Alternatively, in other embodiments some or all of the software components and/or systems may execute in memory on another device and communicate with the illustrated computing systems via inter-computer communication. Thus, in some embodiments, some or all of the described techniques may be performed by hardware means that include one or more processors and/or memory and/or storage when configured by one or more software programs (*e.g.*, by the IFPLMM system 389 executing on server computing systems 380) and/or data structures, such as by execution of software instructions of the one or more software programs and/or by storage of such software instructions and/or data structures, and such as to perform algorithms as described in the flow charts and other disclosure herein. Furthermore, in some embodiments, some or all of the systems and/or components may be implemented or provided in other manners, such as by consisting of one or more means that are implemented partially or fully in firmware and/or hardware (*e.g.*, rather than as a means implemented in whole or in part by software instructions that configure a particular CPU or other processor), including, but not limited to, one or more application-specific integrated circuits (ASICs), standard integrated circuits, controllers (*e.g.*, by executing appropriate instructions, and including microcontrollers and/or embedded controllers), field-programmable gate arrays (FPGAs), complex programmable logic devices (CPLDs), etc. Some or all of the components, systems and data structures may also be stored (*e.g.*, as software instructions or structured data) on a non-transitory computer-readable storage mediums, such as a hard disk or flash drive or other non-volatile storage device, volatile or non-volatile memory (*e.g.*, RAM or flash RAM), a network storage device, or a portable media article (*e.g.*, a DVD disk, a CD disk, an optical disk, a flash memory device, etc.) to be read by an appropriate drive or via an appropriate connection. The systems, components and data structures may also in some embodiments be transmitted via generated data signals (*e.g.*, as part of a carrier wave or other analog or digital propagated signal) on a variety of computer-readable transmission mediums, including wireless-based and wired/cable-based mediums, and may take a variety of forms (*e.g.*, as part of a single or multiplexed analog signal, or as multiple discrete digital packets or frames). Such computer program products may also take other forms in other embodiments. Accordingly, embodiments of the present disclosure may be practiced with other computer system configurations.

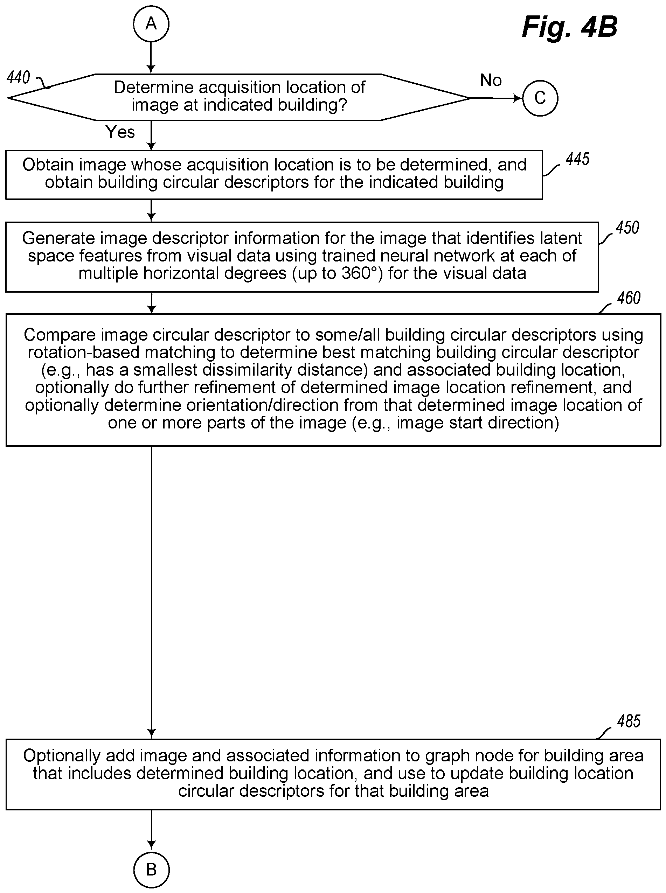

Figures 4A-4B illustrate an example embodiment of a flow diagram for an Image Floor Plan Location Mapping Manager (IFPLMM) System routine 400. The routine may be performed by, for example, execution of the IFPLMM system 140 of Figure 1, the IFPLMM system 389 of Figure 3, and/or an IFPLMM system as described with respect to Figures 2A-2I and elsewhere herein, such as to perform automated operations related to determining the acquisition location of an image based at least in part on an analysis of the image's visual data, and to subsequently using the determined acquisition location information in one or more automated manners. In the example of Figure 4, the acquisition location is determined with respect to a floor plan of a building, such as a house, but in other embodiments, other types of mapping information may be used for other types of structures or for non-structure locations, and the determined acquisition location information may be used in other manners than those discussed with respect to routine 400, as discussed elsewhere herein.

The illustrated embodiment of the routine begins at block 405, where information or instructions are received. The routine continues to block 410 to determine whether the instructions or other information received in block 405 indicate to determine building location circular descriptors for an indicated building, and if not continues to block 440. Otherwise, the routine continues to perform blocks 415-430 to determine the building location circular descriptors, including to obtain a rasterized floor plan for the building in block 415 (*e.g.*, to retrieve from storage, to receive in block 405, etc.) that optionally has associated semantic information for structural wall elements (*e.g.*, doors and other inter-room or inter-area openings, windows, inter-room or other inter-area borders, etc.). In block 420, the routine then generates a point cloud (*e.g.*, a 2D point cloud) corresponding to the building's structural elements shown on the floor plan, and determines associated information for each point (*e.g.*, a 2D XY location, normal direction, semantic data, etc.), and generates latent space features for each point using a trained neural network. In block 425, the routine then generates and stores a building location circular descriptor for each of multiple building locations that identifies features of points in directions from that location (*e.g.*, for each of 360 horizontal degrees). In block 430 the routine then optionally generates and stores a graph with nodes that represent rooms or other building areas, and with inter-node edge corresponding to inter-area connectivity or other inter-area adjacency, and associates each node with the generated building location circular descriptors that correspond to building locations in that room or other building area.

After block 430, or if it is instead determined in block 410 that the instructions or other information received in block 405 are not to determine building location circular descriptors for an indicated building, the routine continues to block 440 to determine whether the instructions or other information received in block 405 indicate to determine the acquisition location of an indicated image (*e.g.*, for an indicated building or within any known buildings), and if so the routine continues to perform blocks 445-485 to do so, and otherwise continues to block 490.

In block 445, the routine obtains information about the image whose acquisition location is to be determined, such as by receiving that image in block 405 or by otherwise retrieving a stored copy of the image. In block 450, the routine then proceeds to generate an image circular descriptor for the image that includes information about features of the image's visual data in each of a plurality of angular directions (e.g., at each of 360 horizontal degrees of angular direction, if the image is a 360° panorama image, such as relative to an angular direction determined to be a starting direction for the image).

In block 460, the routine then compares the image circular descriptor to some or all of building location circular descriptors previously generated for one or more buildings (e.g., for an indicated building, such as with respect to all rooms and/or all non-room areas, for one or more rooms and/or non-room areas to which the image may correspond, etc.) to determine a best matching building location circular descriptor, such as a building location circular descriptor having a smallest dissimilarity distance to the image circular descriptor. The routine further identifies the room location to use as the determined acquisition location for the image based on the room location associated with the best match building location circular descriptor, such as to use that associated room location as the determined acquisition location, or to instead optionally do further refinement of the determined acquisition location. In some embodiments and situations, the routine may further determine orientation and/or direction information from that determined acquisition location that corresponds to one or more parts of the image (e.g., to a starting direction for the image and/or to an ending direction for the image). In block 485, the routine then optionally adds information to a graph node corresponding to that determined acquisition location about the image, and uses visual data of the image and its determined acquisition location to update some or all building location circular descriptors in the room or other area associated with that graph node.

After block 485, the routine continues to block 488 to store the information that was determined and generated in blocks 415 to 485, and to optionally display the determined image acquisition location information for the image in its enclosing room or other area on the floor map (or a floor map excerpt), although in other embodiments the determined information may be used in other manners (e.g., for automated navigation of one or more devices).

If it is instead determined in block 440 that the information or instructions received in block 405 are not to determine the acquisition location of an image, the routine continues instead to block 490 to perform one or more other indicated operations as appropriate. Such other operations may include, for example, receiving and responding to requests for previously determined image acquisition location information and/or for associated images (e.g., requests for such information for display on one or more client devices, requests for such information to provide it to one or more other devices for use in automated navigation, etc.), obtaining and storing information about buildings for use in later operations (e.g., information about floor plans and associated wall element positions for rooms in the floor plan, etc.), performing geometric localization techniques to test associations of wall elements visible in an image to wall elements present in a room (whether to confirm a degree of match for a building location circular descriptor that has already been determined to be a best match for an image circular descriptor and/or as part of the identification of such a best match building location circular descriptor), using machine learning techniques to learn the best encoding to allow matching of an image to a room location, etc.

After blocks 488 or 490, the routine continues to block 495 to determine whether to continue, such as until an explicit indication to terminate is received, or instead only if an explicit indication to continue is received. If it is determined to continue, the routine returns to block 405 to wait for and receive additional instructions or information, and otherwise continues to block 499 and ends.

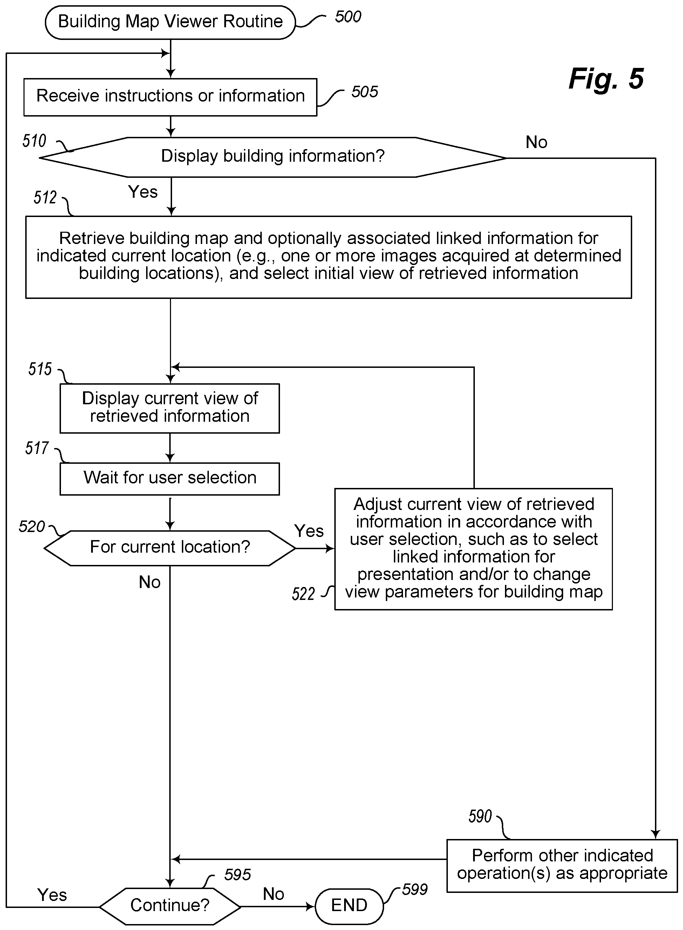

Figure 5 illustrates an example embodiment of a flow diagram for a Building Map Viewer system routine 500. The routine may be performed by, for example, execution of a building viewer client computing device 175 and its software system(s) (not shown) of Figure 1, a client computing device 390 of Figure 3, and/or a building information viewer or presentation system as described elsewhere herein, such as to receive and display mapping information (e.g., a 3D computer model, a 2.5D computer model, a 2D floor plan, etc.) for a defined area that includes visual indications of one or more determined image acquisition locations, as well as to optionally display additional information (e.g., images) associated with particular locations in the mapping information. In the example of Figure 5, the presented mapping information is for a building (e.g., for the interior of a house), but in other embodiments, other types of mapping information may be presented for other types of buildings or environments and used in other manners, as discussed elsewhere herein.

The illustrated embodiment of the routine begins at block 505, where instructions or information are received. At block 510, the routine determines whether the received instructions or information indicate to display or otherwise present information representing one or more building areas (e.g., a building interior), and if not continues to block 590. Otherwise, the routine proceeds to block 512 to retrieve a floor plan and/or other generated mapping information (e.g., a 3D computer model) for the building and optionally indications of associated linked information for the building interior and/or a surrounding location, and selects an initial view of the retrieved information (e.g., a view of the floor plan, of at least some of the 3D computer model, etc.). In block 515, the routine then displays or otherwise presents the current view of the retrieved information, and waits in block 517 for a user selection. After a user selection in block 517, if it is determined in block 520 that the user selection corresponds to the current location (e.g., to change the current view), the routine continues to block 522 to update the current view in accordance with the user selection, and then returns to block 515 to update the displayed or otherwise presented information accordingly. The user selection and corresponding updating of the current view may include, for example, displaying or otherwise presenting a piece of associated linked information that the user selects (*e.g.*, a particular image associated with a displayed visual indication of a determined acquisition location), changing how the current view is displayed (*e.g.*, zooming in or out; rotating information if appropriate; selecting a new portion of the floor plan and/or 3D computer model to be displayed or otherwise presented, such as with some or all of the new portion not being previously visible, or instead with the new portion being a subset of the previously visible information; etc.).

If it is instead determined in block 510 that the instructions or other information received in block 505 are not to present information representing a building interior, the routine continues instead to block 590 to perform any other indicated operations as appropriate, such as any housekeeping tasks, to configure parameters to be used in various operations of the system (e.g., based at least in part on information specified by a user of the system, such as a user of a mobile device who captures one or more building interiors, an operator user of the IFPLMM system, etc.), to obtain and store other information about users of the system, to respond to requests for generated and stored information, etc.

Following block 590, or if it is determined in block 520 that the user selection does not correspond to the current location, the routine proceeds to block 595 to determine whether to continue, such as until an explicit indication to terminate is received, or instead only if an explicit indication to continue is received. If it is determined to continue (e.g., if the user made a selection in block 517 related to a new location to present), the routine returns to block 505 to await additional instructions or information (or to continue on to block 512 if the user made a selection in block 517 related to a new location to present), and if not proceeds to step 599 and ends.

Aspects of the present disclosure are described herein with reference to flowchart illustrations and/or block diagrams of methods, apparatus (systems), and computer program products according to embodiments of the present disclosure. It will be appreciated that each block of the flowchart illustrations and/or block diagrams, and combinations of blocks in the flowchart illustrations and/or block diagrams, can be implemented by computer readable program instructions. It will be further appreciated that in some implementations the functionality provided by the routines discussed above may be provided in alternative ways, such as being split among more routines or consolidated into fewer routines. Similarly, in some implementations illustrated routines may provide more or less functionality than is described, such as when other illustrated routines instead lack or include such functionality respectively, or when the amount of functionality that is provided is altered. In addition, while various operations may be illustrated as being performed in a particular manner (e.g., in serial or in parallel, or synchronous or asynchronous) and/or in a particular order, in other implementations the operations may be performed in other orders and in other manners. Any data structures discussed above may also be structured in different manners, such as by having a single data structure split into multiple data structures and/or by having multiple data structures consolidated into a single data structure. Similarly, in some implementations illustrated data structures may store more or less information than is described, such as when other illustrated data structures instead lack or include such information respectively, or when the amount or types of information that is stored is altered.

From the foregoing it will be appreciated that, although specific embodiments have been described herein for purposes of illustration, various modifications may be made without deviating from the scope of the invention Accordingly, the invention is not limited except as by corresponding claims and the elements recited by those claims. In addition, while certain aspects of the invention may be presented in certain claim forms at certain times, the inventors contemplate the various aspects of the invention in any available claim form. For example, while only some aspects of the invention may be recited as being embodied in a computer-readable medium at particular times, other aspects may likewise be so embodied.

**Claims**

1. A computer-implemented method comprising:

   obtaining, by a computing device and for a building, building location description information including a plurality of building location circular descriptors for a plurality of building locations in the building, wherein each building location circular descriptor is associated with one of the building locations and has first angular information about first latent space features identified for structural elements of the building at specified angular directions from the associated building location, wherein the first latent space features are identified by a first trained neural network using a two-dimensional floor plan of the building;
   generating, by the computing device, an image circular descriptor for a panorama image that is captured in a room of the building and that includes visual information about at least some walls of the room, wherein the image circular descriptor has second angular information about second latent space features identified from the visual information of the panorama image at specified directions by a second trained neural network;
   comparing, by the computing device, the image circular descriptor to the building location circular descriptors to determine one of the building location circular descriptors that is in the room and has first angular information best matching the second angular information of the image circular descriptor;
   associating, by the computing device and based on the comparing, the panorama image with a determined position and orientation in the room, the determined position based on the building location with which the determined one building location circular descriptor is associated, and the determined orientation identifying at least one direction from that building location corresponding to a specified part of the visible information in the panorama image; and

presenting, by the computing device, information that includes the two-dimensional floor plan of the building and shows the room with a visual indication identifying at least the determined position for the panorama image, to cause use of the presented information for navigating the building.

2. The computer-implemented method of claim 1 wherein the presenting of the floor plan further includes visually indicating the determined orientation, and wherein the method further comprises presenting, by the computing device and in response to a user selection of the visual indication on the presented floor plan, at least a portion of the panorama image corresponding to the determined orientation.

3. The computer-implemented method of claim 1 wherein the visual information of the panorama image includes 360 horizontal degrees of visual coverage from an acquisition location of the panorama image,

   wherein the image circular descriptor includes, for each of the 360 horizontal degrees of visual coverage from the acquisition location, information about at least some of the second latent space features associated with any structural elements of the room that are visible in a direction from the acquisition location corresponding to the horizontal degree of visual coverage, and

   wherein each of the building location circular descriptors includes, for each of 360 horizontal degrees from the building location associated with the building location circular descriptor, information about at least some of the first latent space features associated with any structural elements of a surrounding room that are visible in a direction from the that building location corresponding to the horizontal degree of visual coverage.

4. The computer-implemented method of claim 3 wherein the structural elements of the building include at least one door, at least one window, and at least one inter-wall border, and wherein the obtaining of the building location description information includes generating the building location circular descriptors, including generating from the two-dimensional floor plan a two-dimensional point cloud having a plurality of points, including associating information with each of the points that includes two-dimensional location information for the point and normal direction information for the point and semantic information about any structural elements associated with the point, and including analyzing the points and the associated information to generate the first latent space features, wherein each of the points is associated with at least one of the first latent space features.

5. The computer-implemented method of claim 3 further comprising determining the one building location circular descriptor having angular information best matching the information included in the image circular descriptor by performing the generating and the comparing without using any depth information acquired from any depth sensor about a depth from the acquisition location to any surrounding elements of the room.

6. The computer-implemented method of claim 3 further comprising selecting the plurality of building locations in the building by specifying a grid of building locations covering floors of at least some rooms of multiple rooms of the building.

7. The computer-implemented method of claim 3 wherein the comparing of the image circular descriptor to the building location circular descriptors further includes:

   analyzing the visual information to identify, for a characteristic of a specified type, at least one of the 360 horizontal degrees of visual coverage from the acquisition location for which the characteristic is present;
   for each of at least some of the building location circular descriptors, comparing the image circular descriptor to the building location circular descriptor by:

      identifying one or more of the 360 horizontal degrees from the building location associated with the building location circular descriptor at which the characteristic is present; and
      synchronizing locations of each of the identified at least one of the 360 horizontal degrees of visual coverage from the acquisition location to locations of each of the identified one or more 360 horizontal degrees from the building location to determine if, relative to the synchronized locations, information at other horizontal degrees of coverage in the image circular descriptor matches information at other horizontal degrees of coverage in the building location circular descriptor; and

   selecting one of the at least some building location circular descriptors as the determined one building location circular descriptor based on the selected one building location circular descriptor having an identified synchronized location for which the information at the other horizontal degrees of coverage in the building location circular descriptor best matches the information at the other horizontal degrees of coverage in the image circular descriptor, and using the identified synchronized location to determine the orientation in the room for the panorama image.

8.   The computer-implemented method of claim 1 wherein the comparing of the image circular descriptor to the building location circular descriptors includes, for each of at least some of the building location circular descriptors, at least one of determining a probability that the image circular descriptor and the building location circular descriptor are a match by differing less than a specified threshold and selecting one of the at least some building location circular descriptors that has a highest probability of matching the image circular descriptor as the determined one building location circular descriptor, or of using a circular earth mover's distance measurement of a distance between the image circular descriptor and the building location circular descriptor and selecting one of the at least some building location circular descriptors that has a smallest measured distance to the image circular descriptor as the determined one building location circular descriptor.

9.   The computer-implemented method of claim 1 further comprising obtaining a first enumerated group of ranges of angles, obtaining a second enumerated group of ranges of distances, and generating each of the building location circular descriptors by encoding information in that building location circular descriptor about some of the first latent space features by, for each of the at least some points of the structural elements that are visible from the building location of that building location circular descriptor, encoding information in that building location circular descriptor for one of 360 horizontal degrees from that building location to that point that includes one of the ranges of angles from the first enumerated group and one of the ranges of distances from the second enumerated group.

10.  The computer-implemented method of claim 1 wherein the associating of the panorama image with the determined position and orientation further includes, by the computing device:

generating, for each of multiple building location circular descriptors associated with one of multiple building locations in the room, additional visual information for that building location circular descriptor that represents a view from the building location with which that building location circular descriptor is associated and that includes at least some of the second latent space features that are visible at the specified angular directions for that building location circular descriptor; and
determining an acquisition location of an additional image captured in the room by comparing an additional image circular descriptor generated for the additional image to the multiple building location circular descriptors, including using the generated additional visual information for the multiple building location circular descriptors.

11.  The computer-implemented method of claim 1 wherein the comparing of the image circular descriptor to the building location circular descriptors includes using machine learning to identify the determined one building location circular descriptor as being most similar to the image circular descriptor.

12.  A non-transitory computer-readable medium comprising instructions which, when executed by a computer, cause the computer to carry out the steps of the method of any of claims 1-11.

13.  A system comprising means for carrying out the steps of the method of any of claims 1-11.

14.  A computer program comprising instructions which, when the program is executed by a computer, cause the computer to carry out the steps of the method of any of claim 1-11.

**Patentansprüche**

1.   Computerimplementiertes Verfahren, umfassend:

Erhalten, durch eine Rechenvorrichtung und für ein Gebäude, Gebäudestandortbeschreibungsinformationen, die eine Vielzahl von Gebäudestandort-Kreisbeschreibern aufweisen, wobei jeder Gebäudestandort-Kreisbeschreiber einem der Gebäudestandorte zugeordnet ist und erste Winkelinformationen über erste latente Raummerkmale hat, die für Bauelemente des Gebäudes in vorgegebenen Winkelrichtungen von dem zugeordneten Gebäudestandort identifiziert werden, wobei die ersten latenten Raummerkmale durch ein erstes trainiertes neuronales Netzwerk unter Verwendung eines zweidimensionalen Grundrisses des Gebäudes identifiziert werden;

Generieren, durch die Rechenvorrichtung, eines Bild-Kreisbeschreibers für ein Panoramabild, das in einem Raum des Gebäudes aufgenommen wird und das visuelle Informationen über mindestens einige Wände des Raums aufweist, wobei der Bild-Kreisbeschreiber zweite Winkelinformationen über zweite latente Raummerkmale hat, die anhand der visuellen Informationen des Panoramabilds bei vorgegebenen Richtungen durch ein zweites trainiertes neuronales Netzwerk identifiziert werden;

Vergleichen, durch die Rechenvorrichtung, des Bild-Kreisbeschreibers mit den Gebäudestandort-Kreisbeschreibern, um einen der Gebäudestandort-Kreisbeschreiber zu bestimmen, der in dem Raum ist und erste Winkelinformationen hat, die am besten mit den zweiten Winkelinformationen des Bild-Kreisbeschreibers übereinstimmen;

Zuordnen des Panoramabilds, durch die Rechenvorrichtung und auf Basis des Vergleichens, zu einer bestimmten Position und Ausrichtung in dem Raum, wobei die bestimmte Position auf dem Gebäudestandort basiert, dem der bestimmte eine Gebäudestandort-Kreisbeschreiber zugeordnet ist, und die bestimmte Ausrichtung mindestens eine Richtung von diesem Gebäudestandort identifiziert, die einem vorgegebenen Teil der sichtbaren Informationen in dem Panoramabild entspricht; und

Darstellen, durch die Rechenvorrichtung, von Informationen, die den zweidimensionalen Grundriss des Gebäudes aufweisen und den Raum mit einer visuellen Anzeige zeigen, die mindestens die bestimmte Position für das Panoramabild identifiziert, um die Verwendung der dargestellten Informationen zur Navigation durch das Gebäude zu veranlassen.

2. Computerimplementiertes Verfahren nach Anspruch 1, wobei das Darstellen des Grundrisses ferner das visuelle Anzeigen der bestimmten Ausrichtung aufweist und wobei das Verfahren ferner das Darstellen, durch die Rechenvorrichtung und als Reaktion auf eine Benutzerauswahl der visuellen Anzeige auf dem dargestellten Grundriss, von mindestens einem Teil des Panoramabilds entsprechend der bestimmten Ausrichtung umfasst.

3. Computerimplementiertes Verfahren nach Anspruch 1, wobei die visuellen Informationen des Panoramabilds 360 horizontale Grad visueller Abdeckung von einem Erfassungsstandort des Panoramabilds aufweisen,

   wobei der Bild-Kreisbeschreiber für jeden der 360 horizontalen Grade visueller Abdeckung von dem Erfassungsstandort Informationen über mindestens einige der zweiten latenten Raummerkmale aufweist, die Bauelementen des Raums zugeordnet sind, die in einer Richtung von dem Erfassungsstandort, die dem horizontalen Grad visueller Abdeckung entspricht, sichtbar sind, und

   wobei jeder der Gebäudestandort-Kreisbeschreiber für jeden von 360 horizontalen Graden von dem Gebäudestandort, der dem Gebäudestandort-Kreisbeschreiber zugeordnet ist, Informationen über mindestens einige der ersten latenten Raummerkmale aufweist, die Bauelementen eines umgebenden Raums zugeordnet sind, die in einer Richtung von diesem Gebäudestandort, die dem horizontalen Grad visueller Abdeckung entspricht, sichtbar sind.

4. Computerimplementiertes Verfahren nach Anspruch 3, wobei die Bauelemente des Gebäudes mindestens eine Tür, mindestens ein Fenster und mindestens eine Grenze zwischen Wänden aufweisen und wobei das Erhalten der Gebäudestandortbeschreibungsinformationen Generieren der Gebäudestandort-Kreisbeschreiber aufweist, das das Generieren einer zweidimensionalen Punktwolke mit einer Vielzahl von Punkten von dem zweidimensionalen Grundriss aufweist, das das Zuordnen von Informationen zu jedem der Punkte aufweist, die zweidimensionale Standortinformationen für den Punkt und normale Richtungsinformationen für den Punkt und semantische Informationen über dem Punkt zugeordnete Bauelemente aufweisen, und das das Analysieren der Punkte und der zugeordneten Informationen zum Generieren der ersten latenten Raummerkmale aufweist, wobei jeder der Punkte mindestens einem der ersten latenten Raummerkmale zugeordnet ist.

5. Computerimplementiertes Verfahren nach Anspruch 3, ferner umfassend Bestimmen des einen Gebäudestandort-Kreisbeschreibers, der Winkelinformationen hat, die am besten mit den Informationen übereinstimmen, die in dem Bild-Kreisbeschreiber enthalten sind, durch Durchführen des Generierens und des Vergleichens ohne Verwendung irgendwelcher von einem Tiefensensor erfasster Tiefeninformationen über eine Tiefe von dem Erfassungsstandort zu umgebenden Elementen des Raums.

6. Computerimplementiertes Verfahren nach Anspruch 3, ferner umfassend Auswählen der Vielzahl von Gebäudestandorten in dem Gebäude durch Vorgeben eines Rasters von Gebäudestandorten, das Böden von mindestens einigen Räumen von mehreren Räumen des Gebäudes abdeckt.

7.  Computerimplementiertes Verfahren nach Anspruch 3, wobei das Vergleichen des Bild-Kreisbeschreibers mit den Gebäudestandort-Kreisbeschreibern ferner aufweist:

Analysieren der visuellen Informationen zum Identifizieren, für eine Eigenschaft eines vorgegebenen Typs, von mindestens einem der 360 horizontalen Grade visueller Abdeckung von dem Erfassungsstandort, für den die Eigenschaft vorhanden ist;
für jeden von mindestens einigen der Gebäudestandort-Kreisbeschreiber Vergleichen des Bild-Kreisbeschreibers mit dem Gebäudestandort-Kreisbeschreiber durch:

Identifizieren von einem oder mehr der 360 horizontalen Grade von dem Gebäudestandort, der dem Gebäudestandort-Kreisbeschreiber zugeordnet ist, an denen die Eigenschaft vorhanden ist; und
Synchronisieren von Standorten von jedem der identifizierten mindestens einen der 360 horizontalen Grade visueller Abdeckung von dem Erfassungsstandort mit Standorten von jedem der identifizierten einen oder mehr 360 horizontalen Graden von dem Gebäudestandort zum Bestimmen, ob, relativ zu den synchronisierten Standorten, Informationen an anderen horizontalen Abdeckungsgraden in dem Bild-Kreisbeschreiber mit Informationen an anderen horizontalen Abdeckungsgraden in dem Gebäudestandort-Kreisbezeichner übereinstimmen; und
Auswählen von einem des mindestens einen Gebäudestandort-Kreisbeschreibers als den bestimmten einen Gebäudestandort-Kreisbeschreiber auf Basis des ausgewählten einen Gebäudestandort-Kreisbeschreibers, der einen identifizierten synchronisierten Standort hat, für den die Informationen an den anderen horizontalen Abdeckungsgraden in dem Gebäudestandort-Kreisbeschreiber mit den Informationen an den anderen horizontalen Abdeckungsgraden in dem Bild-Kreisbeschreiber am besten übereinstimmen, und Verwenden des identifizierten synchronisierten Standorts zum Bestimmen der Ausrichtung in dem Raum für das Panoramabild.

8.  Computerimplementiertes Verfahren nach Anspruch 1, wobei das Vergleichen des Bild-Kreisbeschreibers mit dem Gebäudestandort-Kreisbeschreiber für jeden von mindestens einigen der Gebäudestandort-Kreisbeschreiber mindestens eines aufweist von Bestimmen einer Wahrscheinlichkeit, dass der Bild-Kreisbeschreiber und der Gebäudekreisbeschreiber übereinstimmen, dadurch, dass sie sich um weniger als einen vorgegebenen Schwellenwert unterscheiden, und Auswählen von einem der mindestens einigen Gebäudestandort-Kreisbeschreiber, der eine höchste Wahrscheinlichkeit des Übereinstimmens mit dem Bild-Kreisbeschreiber hat, als den bestimmten einen Gebäudestandort-Kreisbeschreiber, oder von Verwenden einer Kreis-Erdbewegungsabstandsmessung eines Abstands zwischen dem Bild-Kreisbeschreiber und dem Gebäudestandort-Kreisbeschreiber und Auswählen von einem von den mindestens einigen Gebäudestandort-Kreisbeschreibern, der einen kleinsten gemessenen Abstand zu dem Bild-Kreisbeschreiber hat, als den bestimmten einen Gebäudestandort-Kreisbeschreiber.

9.  Computerimplementiertes Verfahren nach Anspruch 1, ferner umfassend Erhalten einer ersten aufgezählten Gruppe von Winkelbereichen, Erhalten einer zweiten aufgezählten Gruppe von Abstandsbereichen und Generieren von jedem der Gebäudestandort-Kreisbeschreiber durch Kodieren von Informationen in diesem Gebäudestandort-Kreisbeschreiber über einige der ersten latenten Raummerkmale durch, für jeden der mindestens einigen Punkte der Bauelemente, die von dem Gebäudestandort dieses Gebäudestandort-Kreisbeschreibers sichtbar sind, Kodieren von Informationen in diesem Gebäudestandort-Kreisbeschreiber für einen von 360 horizontalen Graden von diesem Gebäudestandort zu diesem Punkt, der einen der Winkelbereiche von der ersten aufgezählten Gruppe und einen der Abstandsbereiche von der zweiten aufgezählten Gruppe aufweist.

10. Computerimplementiertes Verfahren nach Anspruch 1, wobei das Zuordnen des Panoramabilds zu der bestimmten Position und Ausrichtung ferner Folgendes aufweist, durch die Rechenvorrichtung:

Generieren, für jeden von mehreren Gebäudestandort-Kreisbeschreibern, der einem von mehreren Gebäudestandorten in dem Raum zugeordnet ist, von zusätzlichen visuellen Informationen für diesen Gebäudestandort-Kreisbeschreiber, die eine Ansicht von dem Gebäudestandort repräsentieren, dem dieser Gebäudestandort-Kreisbeschreiber zugeordnet ist und der mindestens einige der zweiten latenten Raummerkmale aufweist, die bei den vorgegebenen Winkelrichtungen für diesen Gebäudestandort-Kreisbeschreiber sichtbar sind; und
Bestimmen eines Erfassungsstandorts eines in dem Raum aufgenommenen zusätzlichen Bilds durch Vergleichen eines zusätzlichen Bild-Kreisbeschreibers, der für das zusätzliche Bild generiert wird, mit den mehreren Gebäudestandort-Kreisbeschreibern, das das Verwenden der generierten zusätzlichen visuellen Informationen für die mehreren Gebäudestandort-Kreisbeschreiber aufweist.

**11.** Computerimplementiertes Verfahren nach Anspruch 1, wobei das Vergleichen des Bild-Kreisbeschreibers mit den Gebäudestandort-Kreisbeschreibern das Verwenden von maschinellem Lernen zum Identifizieren des bestimmten einen Gebäudestandort-Kreisbeschreibers als den, der dem Bild-Kreisbeschreiber am ähnlichsten ist, aufweist.

**12.** Nichtflüchtiges computerlesbares Medium, das Anweisungen umfasst, die bei Ausführung durch einen Computer den Computer zum Durchführen der Schritte des Verfahrens nach einem der Ansprüche 1 bis 11 veranlassen.

**13.** System, umfassend Mittel zum Durchführen der Schritte des Verfahrens nach einem der Ansprüche 1 bis 11.

**14.** Computerprogramm, umfassend Anweisungen, die bei Ausführung des Programms durch einen Computer den Computer zum Durchführen der Schritte des Verfahrens nach einem der Ansprüche 1 bis 11 veranlassen.

**Revendications**

**1.** Procédé mis en oeuvre par ordinateur comprenant :

obtenir, par un dispositif informatique et pour un bâtiment, des informations de description d'emplacements de bâtiment comprenant une pluralité de descripteurs circulaires d'emplacements de bâtiment pour une pluralité d'emplacements de bâtiment dans le bâtiment, dans lequel chaque descripteur circulaire d'emplacement de bâtiment est associé à l'un des emplacements du bâtiment et a de premières informations angulaires au sujet de premières caractéristiques d'espace latent identifiées pour des éléments structuraux du bâtiment à des directions angulaires spécifiées de l'emplacement du bâtiment associé, dans lequel les premières caractéristiques d'espace latent sont identifiées par un premier réseau neuronal entraîné en utilisant un plan au sol bidimensionnel du bâtiment ;
générer, par le dispositif informatique, un descripteur circulaire d'image pour une image panoramique qui est saisie dans une pièce du bâtiment et qui comprend des informations visuelles au sujet d'au moins quelques murs de la pièce, dans lequel le descripteur circulaire d'image a des deuxièmes informations angulaires au sujet de deuxièmes caractéristiques d'espace latent identifiées à partir des informations visuelles de l'image panoramique à des directions spécifiées par un deuxième réseau neuronal entraîné ;
comparer, par le dispositif informatique, le descripteur circulaire d'image aux descripteurs circulaires d'emplacements de bâtiment afin de déterminer l'un des descripteurs circulaires d'emplacements de bâtiment qui est dans la pièce et qui a de premières informations angulaires le mieux appariées avec les deuxièmes informations angulaires du descripteur circulaire d'image ;
associer, par le dispositif informatique et sur la base de la comparaison, l'image panoramique à une position et orientation déterminées dans la pièce, la position déterminée étant basée sur l'emplacement du bâtiment avec lequel le descripteur circulaire d'emplacement du bâtiment déterminé est associé, et l'orientation déterminée identifiant au moins une direction de cet emplacement du bâtiment correspondant à une partie spécifiée des informations visibles dans l'image panoramique ; et
présenter, par le dispositif informatique, des informations qui comprennent le plan au sol bidimensionnel du bâtiment et montrent la pièce avec une indication visuelle identifiant au moins la position déterminée pour l'image panoramique, pour faire que les informations présentées soient utilisées pour naviguer dans le bâtiment.

**2.** Procédé mis en oeuvre par ordinateur selon la revendication 1, dans lequel présenter le plan au sol comprend en outre indiquer visuellement l'orientation déterminée, et où le procédé comprend en outre présenter, par le dispositif informatique et en réponse à l'indication visuelle sur le plan au sol présenté, au moins une partie de l'image panoramique correspondant à l'orientation déterminée.

**3.** Procédé mis en oeuvre par ordinateur selon la revendication 1, dans lequel l'information visuelle de l'image panoramique comprend 360 degrés horizontaux de la couverture visuelle d'un emplacement d'acquisition de l'image panoramique,

dans lequel le descripteur circulaire d'image comprend, pour chacun des 360 degrés horizontaux de la couverture visuelle de l'emplacement d'acquisition, des informations sur au moins certaines des deuxièmes caractéristiques d'espace latent associées à des éléments structuraux quelconques de la pièce qui sont visibles dans une direction de l'emplacement d'acquisition correspondant au degré horizontal de la couverture visuelle, et dans lequel chacun des descripteurs circulaires d'emplacements de bâtiment comprend, pour chacun des 360 degrés horizontaux de l'emplacement du bâtiment associé au descripteur circulaire d'emplacement de bâtiment, des informations sur au moins certaines des premières caractéristiques d'espace latent associées à des éléments structuraux quelconques d'une pièce alentour qui sont visibles dans une direction de cet emplacement du bâtiment correspondant au degré horizontal de couverture visuelle.

4. Procédé mis en oeuvre par ordinateur selon la revendication 3, dans lequel les éléments structuraux du bâtiment comprennent au moins une porte, au moins une fenêtre et au moins une bordure inter-murs, et dans lequel obtenir les informations de description de l'emplacement du bâtiment comprend générer des descripteurs circulaires d'emplacements de bâtiment, y compris générer d'un plan au sol bidimensionnel un nuage de points bidimensionnel ayant une pluralité de points, y compris associer des informations à chacun des points qui comprennent des informations d'emplacement bidimensionnel pour le point et des informations de direction perpendiculaire pour le point et des informations sémantiques sur des éléments structuraux quelconques associés au point, et comprenant analyser les points et les informations associées afin de générer les premières caractéristiques d'espace latent, dans lequel chacun des points est associé à au moins l'une des premières caractéristiques d'espace latent.

5. Procédé mis en oeuvre par ordinateur selon la revendication 3, comprenant en outre déterminer le descripteur circulaire d'emplacement de bâtiment ayant des informations circulaires le mieux appariées avec les informations incluses dans le descripteur circulaire d'image en effectuant la génération et la comparaison sans utiliser des informations de profondeur quelconques acquises d'un capteur de profondeur quelconque au sujet d'une profondeur de l'emplacement d'acquisition à des éléments alentour quelconques de la pièce.

6. Procédé mis en oeuvre par ordinateur selon la revendication 3, comprenant en outre sélectionner la pluralité d'emplacements de bâtiment dans le bâtiment en spécifiant une grille d'emplacements du bâtiment couvrant des sols d'au moins certaines des pièces de pièces multiples du bâtiment.

7. Procédé mis en oeuvre par ordinateur selon la revendication 3, dans lequel la comparaison du descripteur circulaire d'image aux descripteurs circulaires d'emplacements de bâtiment comprend :

analyser les informations visuelles pour identifier, pour une caractéristique d'un type spécifié, au moins l'un des 360 degrés horizontaux de couverture visuelle de l'emplacement d'acquisition pour lequel la caractéristique est présente ;
pour chacun d'au moins certains des descripteurs circulaires d'emplacements de bâtiment, comparer le descripteur circulaire d'image au descripteur circulaire d'emplacement de bâtiment en :

identifiant un ou plusieurs des 360 degrés de l'emplacement du bâtiment associé au descripteur circulaire d'emplacement de bâtiment auquel la caractéristique est présente ; et en
synchronisant des emplacements de chacun des au moins l'un des 360 degrés horizontaux identifiés de couverture visuelle de l'emplacement d'acquisition avec des emplacements de chacun de l'un ou plusieurs 360 degrés horizontaux identifiés de l'emplacement du bâtiment afin de déterminer si, par rapport aux emplacements synchronisés, des informations à d'autres degrés horizontaux de couverture dans le descripteur circulaire d'image s'apparient à des informations à d'autres degrés horizontaux de couverture dans le descripteur circulaire d'emplacement de bâtiment ; et en
sélectionnant l'un des au moins certains descripteurs circulaires d'emplacements de bâtiment comme le descripteur circulaire d'emplacement de bâtiment déterminé sur la base du descripteur circulaire d'emplacement de bâtiment sélectionné ayant un emplacement synchronisé identifié pour lequel les informations aux autres degrés horizontaux de couverture dans le descripteur circulaire d'emplacement de bâtiment s'apparient le mieux aux informations aux autres degrés horizontaux de couverture dans le descripteur circulaire d'image, et en utilisant l'emplacement synchronisé identifié pour déterminer l'orientation dans la pièce pour l'image panoramique.

8. Procédé mis en oeuvre par ordinateur selon la revendication 1, dans lequel la comparaison du descripteur circulaire d'image aux descripteurs circulaires d'emplacements de bâtiment comprend, pour chacun d'au moins certains des descripteurs circulaires d'emplacements de bâtiment, au moins l'un d'entre déterminer une probabilité que le descripteur circulaire d'image et le descripteur circulaire d'emplacement de bâtiment sont un appariement en différant moins d'un seuil spécifié et sélectionner l'un des au moins certains descripteurs circulaires d'emplacements de bâtiment qui a la plus haute probabilité d'être apparié au descripteur circulaire d'image comme le descripteur circulaire d'emplacement de bâtiment déterminé, ou bien utiliser une mesure de distance d'engin de terrassement circulaire d'une distance entre le descripteur circulaire d'image et le descripteur circulaire d'emplacement de bâtiment et sélectionner l'un des au moins certains descripteurs circulaires d'emplacements de bâtiment qui la plus petite distance mesurée au descripteur circulaire d'image comme le descripteur circulaire d'emplacement de bâtiment déterminé.

9. Procédé mis en oeuvre par ordinateur selon la revendication 1, comprenant en outre obtenir un premier groupe énuméré de plages d'angles, obtenir un deuxième groupe énuméré de plages de distances, et générer chacun des descripteurs circulaires d'emplacements de bâtiment par des informations de codage dans ce descripteur circulaire d'emplacement de bâtiment au sujet des premières caractéristiques d'espace latent en, pour chacun des au moins certains points des éléments structuraux qui sont visibles de l'emplacement du bâtiment de ce descripteur circulaire d'emplacement de bâtiment, codant des informations dans ce descripteur circulaire d'emplacement de bâtiment pour l'un de 360 degrés horizontaux de cet emplacement du bâtiment jusqu'à ce point qui comprennent l'une des plages d'angles du premier groupe énuméré et l'une des plages de distances du deuxième groupe énuméré.

10. Procédé mis en oeuvre par ordinateur selon la revendication 1, dans lequel l'association de l'image panoramique à la position et orientation déterminées comprend en outre, par le dispositif informatique :

générer, pour chacun des multiples descripteurs circulaires d'emplacements de bâtiment associés à l'un de multiples emplacements du bâtiment dans la pièce, des informations visuelles supplémentaires pour ce descripteur circulaire d'emplacement de bâtiment qui représentent une vue de l'emplacement du bâtiment à laquelle le descripteur circulaire d'emplacement de bâtiment est associé et qui comprend au moins certaines des deuxièmes caractéristiques d'espace latent qui sont visibles aux directions angulaires spécifiées pour ce descripteur circulaire d'emplacement de bâtiment ; et
déterminer un emplacement d'acquisition d'une image supplémentaire saisie dans la pièce en comparant un descripteur circulaire d'image supplémentaire généré pour l'image supplémentaire aux descripteurs circulaires d'emplacements de bâtiment, y compris utiliser les informations visuelles supplémentaires générées pour les multiples descripteurs circulaires d'emplacements de bâtiment.

11. Procédé mis en oeuvre par ordinateur selon la revendication 1, dans lequel la comparaison du descripteur circulaire d'image aux descripteurs circulaires d'emplacements de bâtiment comprend utiliser l'apprentissage machine pour identifier le descripteur circulaire d'emplacement de bâtiment déterminé comme étant le plus similaire au descripteur circulaire d'image.

12. Support non transitoire lisible par ordinateur, comprenant des instructions qui, lorsque exécutées par un ordinateur, font que l'ordinateur met en oeuvre les étapes du procédé selon l'une quelconque des revendications 1-11.

13. Système comprenant des moyens pour mettre en oeuvre les étapes du procédé selon l'une quelconque des revendications 1-11.

14. Programme informatique comprenant des instructions qui, lorsque le programme est exécuté par un ordinateur, font que l'ordinateur met en oeuvre les étapes du procédé selon l'une quelconque des revendications 1-11.

**Fig. 1**

server computing system(s) *180*

Image Floor Plan Location Mapping Manager (IFPLMM) System *140*

images and locations *145*

building floor plans *155*

Image Capture & Analysis (ICA) and/or Mapping Information Generation Manager (MIGM) System(s) *160*

360° panorama images *165*

building floor plans / other mapping information *154*

IFPLMM system user client computing devices *105*

network(s) *170*

building information viewer user client computing devices *175*

mobile image acquisition device

memory *152*

ICA Application *154*

browser *162*

sensor modules *148*

gyroscope *148a*

accelerometer *148b*

compass *148c*

processor(s) *132*

imaging system *135*

display system *142*

control system *147*

*185*

*198* *195-1* *196-1* *194-1* *192* *196-8* *196-7* *186* *187*

*196-2* *115* *210B* *215-BC* *195-2* *210E* *210H* *210I*

*193*

*185* *196-1* *263b* *185* *197* *115* *210J* *188*

*109* *115* *210C* *115* *210K* *115*

*215-AB* *115*

*215-AC* *210K*

N W E S

*263a* *190-3* *up* *up* *194-2* *196-9*

*190-1* *210A* *210D* *210F* *210N*

*191* *210M*

*195-3* *196-3* *196-4* *196-5* *210L* *196-6* *210K*

*195-4*

*Fig. 2A*

$232i - P_i = (\vec{x_i}, \vec{n_i}, s_i)$

door
window
deck
accessory structure
yard / patio

Fig. 2B

**Fig. 2C**

233c 233g 233k 233n
233a 233e 233i 233m 233o
233 233

IFPLMM circular feature descriptor renderer 273

grid-based building location circular descriptors 278

233b 233f 233j 233p 233q
233d 233h 233l

268c5

260a

0° 234h 234i 234j ⋯ 90° 269a 180° 270° 360°
234g

rendered building location circular descriptor (360°) 278c5

**columns**

233b
233a 1 2 3 4 5 6 7 8 9 10 233o
233c 360° 0° 233g 233i
**rows** 233q

a
b
c — 268c5
d 278c5
e
f
g partial building location grid 268
h
l 260a
j
k

$234g - \vec{f_g} = g_{g0} + h_{g1} + \ldots$

$234h - \vec{f_h} = g_{h1} + h_{h2} + \ldots$

$234i - \vec{f_i} = g_{i3} + h_{i2} + \ldots$

272

rendering attributes 270

| incident angle (degrees) | $g_i$ | distance (meters) | $h_i$ | ... |
|---|---|---|---|---|
| 0 - 10 | $g_{i0}$ | 0 - 0.5 | $h_{i0}$ | |
| 10 - 20 | $g_{i1}$ | 0.5 - 1.0 | $h_{i1}$ | |
| 20 - 30 | $g_{i2}$ | 1.0 - 1.5 | $h_{i2}$ | |
| 30 - 40 | $g_{i3}$ | 1.5 - 2.0 | $h_{i3}$ | |
| ⋮ | | | | |

33

**Fig. 2D**

IFPLMM image feature assignment trained neural network — 274d

*OR*

image circular descriptor(s) 279

255d

251d  195-2

90°
0°        180°

195-1

195-3

195-2

195-3

250d

195-1

196-1   195-4

195-1

195-3

0°   180°
265

267

196-1

0°        90°        180°        270°        360°

236c (195-1)

236d (195-3)

236a  (northern end of
       west-facing window)

236b

rendered image circular descriptor (360°) 279d (250d)

260a

195-3

195-4

EP 4 170 593 B1

image circular descriptor *279d* → *276* IFPLMM rotation-based matcher / refinement via trained neural network ← building location circular descriptors *278*

*277* → image's building location

grid-based similarity heat map *288*

*265* *289*

*268c5*

*260a*

*268g4*

*Fig. 2E*

Fig. 2F

**Fig. 2G**

Fig. 2H

Fig. 2I

mobile image acquisition device(s) 360

CPU 361 | I/O components 362

storage 365

memory 367

browser / client application 368

imaging system 364

IMU hardware sensors 369

IFPLMM server computing system(s) 380

storage 385

building floor plan information 391

images 393

image location information 392

descriptor information 394

I/O components 382

CPU 381

memory 387

IFPLMM System 389

other programs 388

ICA and MIGM server computing system(s) 300

storage 320

360° panorama image information 324

building mapping information 326

building wall element information 328

additional information 329

user information 322

CPU 305

memory 330

ICA System 340

MIGM System 345

other programs 335

I/O components 310

display 311

network connection 312

computer-readable media drive 313

other I/O devices 315

other navigable devices 395

network 399

client computing device(s) 390

*Fig. 3*

40

**Fig. 4A**

```
                    IFPLMM System Routine              ⌐ 400

                    Receive instructions or information    ⌐ 405

  410
         Determine acquisition location                    No
         information for indicated building?

              Yes                                          ⌐ 415

    Obtain rasterized floor plan for indicated building, optionally with associated
    semantic information (e.g., room types; locations of wall elements, such as
    doors, inter-room openings, windows, inter-room borders, etc.; etc.)
                                                                              ⌐ 420

    Generate 2D point cloud for building's structural elements, determine
    information for each point (e.g., XY location, normal direction, sematic data,
    etc.), and generate points' latent space features using trained neural network
                                                                              ⌐ 425

    Generate and store a building circular descriptor for each of a plurality of
    building locations (e.g., grid-based in-room locations) that identifies features
    of points in directions from the location (e.g., for 360 horizontal degrees)
                                                                              ⌐ 430

    Optionally generate and store a graph with nodes representing rooms or
    other building areas and optionally with inter-node edges corresponding to
    inter-room connections and/or other inter-room adjacency, and associate
    with each node the generated building circular descriptors for building
    locations in that room or other building area


                         ( A )


                         ( B )

    Store information determined and generated in blocks              ( C )
    415-485, and optionally display or otherwise provide       ⌐ 488         ⌐ 490
    information about any determined image locations                   Perform other
                                                                       indicated
          495                                                          operation(s)
     Yes                                                 No             as appropriate
              Continue?              END
                                          499
```

## Fig. 4B

(A)

440 — Determine acquisition location of image at indicated building? ——— No → (C)

Yes ↓

Obtain image whose acquisition location is to be determined, and obtain building circular descriptors for the indicated building — 445

Generate image descriptor information for the image that identifies latent space features from visual data using trained neural network at each of multiple horizontal degrees (up to 360°) for the visual data — 450

460

Compare image circular descriptor to some/all building circular descriptors using rotation-based matching to determine best matching building circular descriptor (e.g., has a smallest dissimilarity distance) and associated building location, optionally do further refinement of determined image location refinement, and optionally determine orientation/direction from that determined image location of one or more parts of the image (e.g., image start direction)

485

Optionally add image and associated information to graph node for building area that includes determined building location, and use to update building location circular descriptors for that building area

(B)

**Fig. 5**

Building Map Viewer Routine — *500*

Receive instructions or information — *505*

*510* — Display building information? — No

Yes

*512* — Retrieve building map and optionally associated linked information for indicated current location (e.g., one or more images acquired at determined building locations), and select initial view of retrieved information

*515* — Display current view of retrieved information

*517* — Wait for user selection

*520* — For current location? — Yes

*522* — Adjust current view of retrieved information in accordance with user selection, such as to select linked information for presentation and/or to change view parameters for building map

No

*590* — Perform other indicated operation(s) as appropriate

*595* — Yes — Continue? — No — END *599*

**EP 4 170 593 B1**

**Patent documents cited in the description**

- US 2020116493 A